# EUROPEAN PATENT APPLICATION

(11) **EP 3 979 640 A1**
(43) Date of publication of application: **06.04.2022**
(21) Application number: 20813158.1
(22) Date of filing: 28.05.2020
(51) Int. Cl.: H04N 19/119, H04N 19/70, H04N 19/132, H04N 19/186

(54) **VIDEO ENCODING METHOD AND APPARATUS, AND VIDEO DECODING METHOD AND APPARATUS FOR PREVENTING SMALL-SIZED INTRA BLOCK**

(30) Priority: 28.05.2019 US 201962853359 P; 05.07.2019 US 201962871002 P
(71) Applicant: Samsung Electronics Co., Ltd., Suwon-si, Gyeonggi-do 16677 (KR)
(72) Inventor: PARK, Minsoo, Suwon-si, Gyeonggi-do 16677 (KR); PARK, Minwoo, Suwon-si, Gyeonggi-do 16677 (KR); JEONG, Seungsoo, Suwon-si, Gyeonggi-do 16677 (KR); CHOI, Kiho, Suwon-si, Gyeonggi-do 16677 (KR); CHOI, Narae, Suwon-si, Gyeonggi-do 16677 (KR); CHOI, Woongil, Suwon-si, Gyeonggi-do 16677 (KR); TAMSE, Anish, Suwon-si, Gyeonggi-do 16677 (KR); PIAO, Yinji, Suwon-si, Gyeonggi-do 16677 (KR)
(74) Representative: Appleyard Lees IP LLP
(86) International application number: PCT/KR2020/006940
(87) International publication number: WO 2020/242229

(57) **Abstract**

A video decoding method according to an embodiment of the present disclosure includes: obtaining a width of a picture based on information about the width of the picture obtained from a bitstream and obtaining a height of the picture based on information about the height of the picture obtained from the bitstream; when an x coordinate according to a luma width of a current block generated from the picture is not greater than the width of the picture, a y coordinate according to a luma height of the current block is not greater than the height of the picture, and a split mode of a luma block of the current block is a non-split mode, decoding the luma block; and determining a chroma block corresponding to the luma block and decoding the chroma block, wherein the information about the width of the picture indicates a number of luma samples arranged in a width direction of the picture, the number of luma samples arranged in the width direction is an integer multiple of 8, the information about the height of the picture indicates a number of luma samples arranged in a height direction of the picture, and the number of luma samples arranged in the height direction is an integer multiple of 8.

## Description

### TECHNICAL FIELD

The present disclosure relates to the fields of image encoding and decoding. In detail, the present disclosure relates to a method and apparatus for encoding and decoding a video by splitting an image into blocks having various shapes.

### BACKGROUND ART

In a compression method according to the related art, after determining whether or not to split a coding unit included in a picture in a process of determining a size of the coding unit, 4 coding units having the same size are uniformly split via a recursive splitting process, and thus, square coding units are determined. However, recently, with respect to a high resolution image, using a coding unit having a uniform square shape has caused deterioration in image quality of a reconstructed image. Thus, methods and apparatuses for splitting a high resolution image into coding units having various shapes are provided.

The present disclosure provides an encoding method and apparatus and a decoding method and apparatus for effectively signaling a syntax element with respect to sizes of coding units having various shapes.

### DESCRIPTION OF EMBODIMENTS

### TECHNICAL PROBLEM

A technical objective according to an embodiment is to efficiently signal information about a split method of blocks, between a video encoding apparatus and a video decoding apparatus, to decode a video that is encoded by using blocks split from an image into various shapes.

### SOLUTION TO PROBLEM

A video decoding method according to an embodiment of the present disclosure includes: obtaining a width of a picture based on information about the width of the picture obtained from a bitstream and obtaining a height of the picture based on information about the height of the picture obtained from the bitstream; when an x coordinate according to a luma width of a current block generated from the picture is not greater than the width of the picture, a y coordinate according to a luma height of the current block is not greater than the height of the picture, and a split mode of a luma block of the current block is a non-split mode, decoding the luma block; and determining a chroma block corresponding to the luma block and decoding the chroma block, wherein the information about the width of the picture indicates a number of luma samples arranged in a width direction of the picture, the number of luma samples arranged in the width direction is an integer multiple of 8, the information about the height of the picture indicates a number of luma samples arranged in a height direction of the picture, and the number of luma samples arranged in the height direction is an integer multiple of 8.

### ADVANTAGEOUS EFFECTS OF DISCLOSURE

According to various embodiments of the present disclosure, generation of a small-sized intra block may be prevented by constraining a size of a picture that may be supported by a video decoding apparatus. Accordingly, throughputs which may occur when a small-sized intra block is used by a video decoding apparatus and a video encoding apparatus may be fundamentally prevented.

However, effects which may be achieved by an encoding and decoding method using a tile and a picture and an encoding and decoding apparatus using a tile and a picture according to an embodiment are not limited to the effects described above. Other effects, which are not mentioned, would be clearly understood by one of ordinary skill in the art based on descriptions below.

### BRIEF DESCRIPTION OF DRAWINGS

A brief description of each drawing is provided to better understand the drawings cited herein.
FIG. 1 is a schematic block diagram of an image decoding apparatus according to an embodiment.
FIG. 2 is a flowchart of an image decoding method according to an embodiment.
FIG. 3 illustrates a process, performed by an image decoding apparatus, of determining at least one coding unit by splitting a current coding unit, according to an embodiment.
FIG. 4 illustrates a process, performed by an image decoding apparatus, of determining at least one coding unit by splitting a non-square coding unit, according to an embodiment.
FIG. 5 illustrates a process, performed by an image decoding apparatus, of splitting a coding unit based on at least one of block shape information and split shape mode information, according to an embodiment.
FIG. 6 illustrates a method, performed by an image decoding apparatus, of determining a certain coding unit from among an odd number of coding units, according to an embodiment.
FIG. 7 illustrates an order of processing a plurality of coding units when an image decoding apparatus determines the plurality of coding units by splitting a current coding unit, according to an embodiment.
FIG. 8 illustrates a process, performed by an image decoding apparatus, of determining that a current coding unit is to be split into an odd number of coding units, when the coding units are not processable in a certain order, according to an embodiment.
FIG. 9 illustrates a process, performed by an image decoding apparatus, of determining at least one coding unit by splitting a first coding unit, according to an embodiment.
FIG. 10 illustrates that a shape into which a second coding unit is splittable is restricted when the second coding unit having a non-square shape, which is determined when an image decoding apparatus splits a first coding unit, satisfies a certain condition, according to an embodiment.
FIG. 11 illustrates a process, performed by an image decoding apparatus, of splitting a square coding unit when split shape mode information is unable to indicate that the square coding unit is split into four square coding units, according to an embodiment.
FIG. 12 illustrates that a processing order between a plurality of coding units may be changed depending on a process of splitting a coding unit, according to an embodiment.
FIG. 13 illustrates a process of determining a depth of a coding unit when a shape and size of the coding unit change, when the coding unit is recursively split such that a plurality of coding units are determined, according to an embodiment.
FIG. 14 illustrates depths that are determinable based on shapes and sizes of coding units, and part indexes (PIDs) that are for distinguishing the coding units, according to an embodiment.
FIG. 15 illustrates that a plurality of coding units are determined based on a plurality of certain data units included in a picture, according to an embodiment.
FIG. 16 is a block diagram of an image encoding and decoding system.
FIG. 17 is a detailed block diagram of a video decoding apparatus according to an embodiment.
FIG. 18 is a flowchart of a video decoding method according to an embodiment.
FIG. 19 is a block diagram of a video encoding apparatus according to an embodiment.
FIG. 20 is a flowchart of a video encoding method according to an embodiment.
FIG. 21 illustrates cases in which, when a width and a height of a picture are not multiple numbers of 8, coding tree units (CTUs) deviate from a boundary line of the picture.
FIG. 22 illustrates a case in which, when a width and a height of a picture are not multiple numbers of 8, a CTU spanning a boundary line of the picture is quad split to a size of 8x8.
FIG. 23 illustrates a case in which a condition for allowing a quad split is differently set between a CTU spanning a boundary line of a picture and a CTU located in the picture, according to another embodiment.
FIGS. 24 and 25 illustrate cases in which a condition for allowing a binary split is differently set between a CTU spanning a boundary line of a picture and a CTU located in the picture, according to another embodiment.
FIG. 26 illustrates a case in which a condition for allowing a ternary split is differently set between a CTU spanning a boundary line of a picture and a CTU located in the picture, according to another embodiment.
FIG. 27 illustrates embodiments in which padding is performed such that a chroma block located at a boundary line of a picture and having a size of 2x2, 4x2, or 2x4 becomes a chroma block having a size of 4x4, according to another embodiment.
FIG. 28 illustrates a process of performing transformation/quantization and residual coding when a chroma block located at a boundary line of a picture and having a size of 2x2 is padded to be a chroma block having a size of 4x4, according to another embodiment.
FIG. 29 illustrates a coding order of transform blocks in a CTU having a size of 128x128.
FIG. 30 illustrates a coding order of split blocks when a quad split, a binary horizontal split, and a binary vertical split are performed on the CTU of FIG. 29.
FIG. 31 illustrates embodiments in which a location of a reference sample to be used for performing prediction in a pipeline data unit is changed according to a coding order.
FIG. 32 illustrates a first set of split methods allowed in a CTU having a size of 128x128 in order to fix a coding order of pipeline data units, according to an embodiment.
FIG. 33 illustrates a second set of split methods allowed in a CTU having a size of 128x128 in order to fix a coding order of pipeline data units, according to an embodiment.
FIG. 34 illustrates a third set of split methods allowed in a CTU having a size of 128x128 in order to fix a coding order of pipeline data units, according to an embodiment.
FIG. 35 illustrates an embodiment applicable to the versatile video coding (VVC) international standard, in order to constrain a split method allowed in a CTU, according to an embodiment.
FIG. 36 illustrates a condition added to allow a binary split so as to be applicable to the VVC international standard according to the embodiment of FIG. 35.
FIG. 37 illustrates an embodiment applicable to the essential video coding (EVC) international standard, in order to constrain a split method allowed in a CTU, according to an embodiment.
FIG. 38 illustrates a condition added to allow a binary split so as to be applicable to the EVC international standard according to the embodiment of FIG. 37.

### BEST MODE

A video decoding method according to an embodiment of the present disclosure includes: obtaining a width of a picture based on information about the width of the picture obtained from a bitstream and obtaining a height of the picture based on information about the height of the picture obtained from the bitstream; when an x coordinate according to a luma width of a current block generated from the picture is not greater than the width of the picture, a y coordinate according to a luma height of the current block is not greater than the height of the picture, and a split mode of a luma block of the current block is a non-split mode, decoding the luma block; and determining a chroma block corresponding to the luma block and decoding the chroma block, wherein the information about the width of the picture indicates a number of luma samples arranged in a width direction of the picture, the number of luma samples arranged in the width direction is an integer multiple of 8, the information about the height of the picture indicates a number of luma samples arranged in a height direction of the picture, and the number of luma samples arranged in the height direction is an integer multiple of 8.

According to an embodiment, the obtaining of the height of the picture may include, when at least one of a width and a height of a smallest block allowed for the current block is less than 8, obtaining the width of the picture that is an integer multiple of 8 according to the information about the width of the picture and obtaining the height of the picture that is an integer multiple of 8 according to the information about the height of the picture.

According to an embodiment, the decoding of the chroma block may include, when a tree type of the current block is a dual tree type, determining a tree structure of chroma blocks separately from a tree structure of luma blocks of the current block and decoding the chroma blocks according to the determined tree structure.

According to an embodiment, the decoding of the chroma blocks may include, when an x coordinate according to a width of a current chroma block from among the chroma blocks according to the tree structure is not greater than the width of the picture, a y coordinate according to a height of the current chroma block is not greater than the height of the picture, and a split mode of the current chroma block is a non-split mode, decoding the current chroma block.

According to an embodiment, the determining of the tree structure of the current chroma block may include, when the tree type of the current block is the dual tree type and a prediction mode of the current block is an intra prediction mode, and when a width of the chroma block is 4, not allowing a binary vertical split of the chroma block.

According to an embodiment, the determining of the tree structure of the current chroma block may include, when the tree type of the current block is the dual tree type and a prediction mode of the current block is an intra prediction mode, and when a number of chroma samples corresponding to the luma block is less than or equal to 16, not allowing a binary split of the chroma block.

According to an embodiment, the determining of the tree structure of the current chroma block may include, when the tree type of the current block is the dual tree type and a prediction mode of the current block is an intra prediction mode, and when a number of chroma samples corresponding to the luma block is less than or equal to 32, not allowing a ternary split of the chroma block.

According to an embodiment, the information about the width of the picture may indicate a value which is an integer multiple of whichever the greater value between a minimum size of the luma block and 8, and the information about the height of the picture may indicate a value which is an integer multiple of whichever the greater value between the minimum size of the luma block and 8.

According to an embodiment, the information about the width of the picture and the information about the height of the picture may be obtained from at least one of a picture parameter set syntax structure and a sequence parameter set syntax structure.

A video decoding apparatus according to an embodiment of the present disclosure includes: a luma block decoder configured to: obtain a width of a picture based on information about the width of the picture obtained from a bitstream; obtain a height of the picture based on information about the height of the picture obtained from the bitstream; and decode the luma block, when an x coordinate according to a luma width of a current block generated from the picture is not greater than the width of the picture, a y coordinate according to a luma height of the current block is not greater than the height of the picture, and a split mode of a luma block of the current block is a non-split mode; and a chroma block decoder configured to decode a chroma block corresponding to the luma block, wherein the information about the width of the picture indicates a number of luma samples arranged in a width direction of the picture, the number of luma samples arranged in the width direction is an integer multiple of 8, the information about the height of the picture indicates a number of luma samples arranged in a height direction of the picture, and the number of luma samples arranged in the height direction is an integer multiple of 8.

A video encoding method according to an embodiment of the present disclosure includes: generating information about a width of a picture indicating a number of luma samples arranged in a width direction of the picture and information about a height of the picture indicating a number of luma samples arranged in a height direction of the picture; when an x coordinate according to a luma width of a current block generated from the picture is not greater than the width of the picture, a y coordinate according to a luma height of the current block is not greater than the height of the picture, and a split mode of a luma block of the current block is a non-split mode, encoding the luma block; and determining a chroma block corresponding to the luma block and encoding the chroma block, wherein the number of luma samples arranged in the width direction of the picture is an integer multiple of 8, and the number of luma samples arranged in the height direction of the picture is an integer multiple of 8.

According to an embodiment, the generating of the information about the width of the picture and the information about the height of the picture may include, when at least one of a width and a height of a smallest block allowed for the current block is less than 8, determining the width of the picture to be an integer multiple of 8 and determining the height of the picture to be an integer multiple of 8.

According to an embodiment, the encoding of the chroma block may include, when a tree type of the current block is a dual tree type, determining a tree structure of chroma blocks separately from a tree structure of luma blocks of the current block and encoding the chroma blocks according to the determined tree structure.

According to an embodiment, the encoding of the chroma block may include, when an x coordinate according to a width of a current chroma block from among the chroma blocks according to the tree structure is not greater than the width of the picture, a y coordinate according to a height of the current chroma block is not greater than the height of the picture, and a split mode of the current chroma block is a non-split mode, encoding the current chroma block.

According to an embodiment, the information about the width of the picture may be generated to indicate an integer multiple of whichever the greater value between a minimum size of the luma block and 8, and the information about the height of the picture may be generated to indicate an integer multiple of whichever the greater value between the minimum size of the luma block and 8.

A computer-readable recording medium according to an embodiment of the present disclosure has recorded thereon a program for executing a video decoding method on a computer.

A computer-readable recording medium according to an embodiment of the present disclosure has recorded thereon a program for executing a video encoding method on a computer.

### MODE OF DISCLOSURE

As the present disclosure allows for various changes and numerous examples, particular embodiments will be illustrated in the drawings and described in detail in the written description. However, this is not intended to limit the present disclosure to particular modes of practice, and it will be understood that all changes, equivalents, and substitutes that do not depart from the spirit and technical scope of various embodiments are encompassed in the present disclosure.

In the description of embodiments, certain detailed explanations of related art are omitted when it is deemed that they may unnecessarily obscure the essence of the present disclosure. Also, numbers (for example, a first, a second, and the like) used in the description of the specification are merely identifier codes for distinguishing one element from another.

Also, in the present specification, it will be understood that when elements are "connected" or "coupled" to each other, the elements may be directly connected or coupled to each other, but may alternatively be connected or coupled to each other with an intervening element therebetween, unless specified otherwise.

In the present specification, regarding an element represented as a "unit" or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

Also, in the present specification, an 'image' or a 'picture' may denote a still image of a video or a moving image, i.e., the video itself.

Also, in the present specification, a 'sample' denotes data assigned to a sampling position of an image, i.e., data to be processed. For example, pixel values of an image in a spatial domain and transform coefficients on a transform region may be samples. A unit including at least one such sample may be defined as a block.

Also, in the present specification, a 'current block' may denote a block of a coding tree unit (CTU), coding unit, prediction unit, or transform unit of a current image to be encoded or decoded.

In the present specification, a motion vector in a list 0 direction may denote a motion vector used to indicate a block in a reference picture included in a list 0, and a motion vector in a list 1 direction may denote a motion vector used to indicate a block in a reference picture included in a list 1. Also, a motion vector in a unidirection may denote a motion vector used to indicate a block in a reference picture included in a list 0 or list 1, and a motion vector in a bidirection may denote that the motion vector includes a motion vector in a list 0 direction and a motion vector in a list 1 direction.

Also, in this specification, a "binary split" of a block denotes a split for generating two sub-blocks, a width or a height of which is a half of a width or a height of the block. In detail, when a "binary vertical split" is performed on a current block, splitting is performed in a vertical direction (a height direction) at a half point of a width of the current block, and thus, two sub-blocks each having a half width of the width of the current block and the same height as a height of the current block may be generated. When a "binary horizontal split" is performed on a current block, splitting is performed in a horizontal direction (a width direction) at a half point of a height of the current block, and thus, two sub-blocks each having a half height of the height of the current block and the same width as a width of the current block may be generated.

Also, in this specification, a "ternary split" of a block denotes a split for generating three sub-blocks by splitting a width or a height of the block as a ratio of 1:2:1. In detail, when a "ternary vertical split" is performed on a current block, splitting is performed in a vertical direction (a height direction) at a 1:2:1 ratio point of a width of the current block, and thus, two sub-blocks each having a quarter width of the width of the current block and the same height as a height of the current block, and one sub-block having a two fourths width of the width of the current block and the same height as the height of the current block may be generated. When a "ternary horizontal split" is performed on a current block, splitting is performed in a horizontal direction (a width direction) at a 1:2:1 ratio point of a height of the current block, and thus, two sub-blocks each having a quarter height of the height of the current block and the same width as a width of the current block, and one sub-block having a two fourths height of the height of the current block and the same width as the width of the current block may be generated.

Also, in this specification, a "quad split" of a block denotes a split for generating four sub-blocks by splitting a width and a height of the block as a ratio of 1:1. In detail, when a "quad split" is performed on a current block, splitting is performed in a vertical direction (a height direction) at a half point of a width of the current block and in a horizontal direction (a width direction) at a half point of a height of the current block, and thus, four sub-blocks each having a half width of the width of the current block and a half height of the height of the current block may be generated.

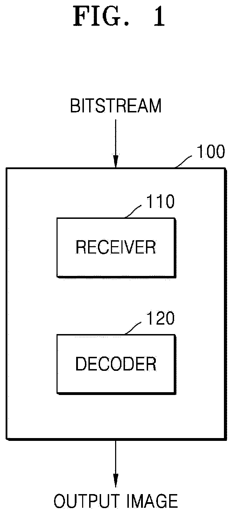

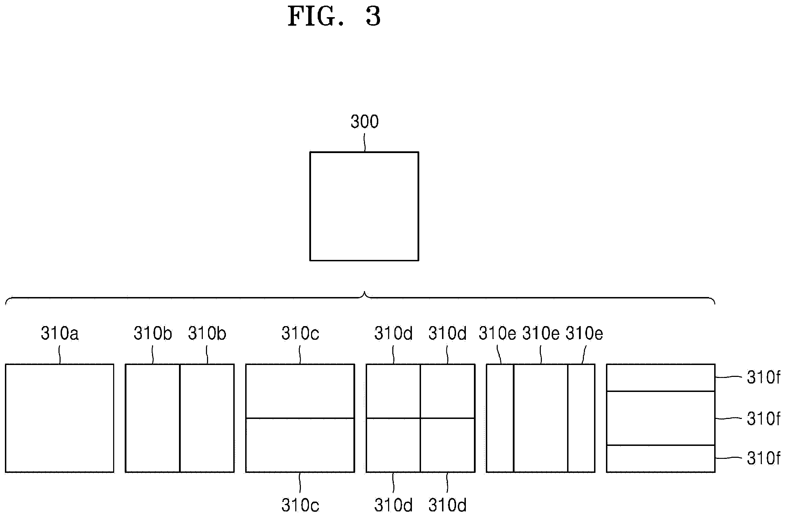

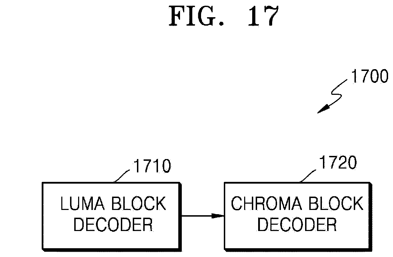

Hereinafter, an image encoding apparatus and an image decoding apparatus, and an image encoding method and an image decoding method, according to an embodiment, will be described with reference to FIGS. 1 through 16. A method of determining a data unit of an image, according to an embodiment, will be described with reference to FIGS. 3 through 16, and a video encoding/decoding method according to an embodiment will be described with reference to FIGS. 17 through 38.

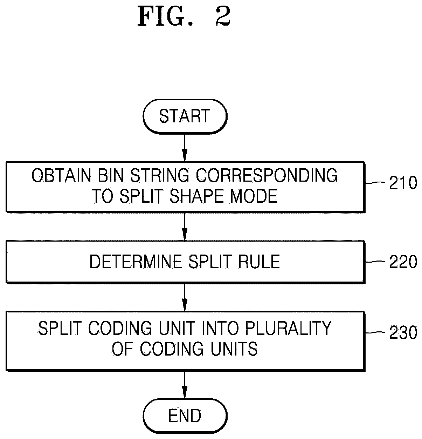

Hereinafter, a method and apparatus for adaptive selection based on various shapes of coding units, according to an embodiment of the present disclosure, will be described with reference to FIGS. 1 and 2.

FIG. 1 is a schematic block diagram of an image decoding apparatus according to an embodiment.

An image decoding apparatus 100 may include a receiver 110 and a decoder 120. The receiver 110 and the decoder 120 may include at least one processor. Also, the receiver 110 and the decoder 120 may include a memory storing instructions to be performed by the at least one processor.

The receiver 110 may receive a bitstream. The bitstream includes information of an image encoded by an image encoding apparatus 2200 described later. Also, the bitstream may be transmitted from the image encoding apparatus 2200. The image encoding apparatus 2200 and the image decoding apparatus 100 may be connected by wire or wirelessly, and the receiver 110 may receive the bitstream by wire or wirelessly. The receiver 110 may receive the bitstream from a storage medium, such as an optical medium or a hard disk. The decoder 120 may reconstruct an image based on information obtained from the received bitstream. The decoder 120 may obtain, from the bitstream, a syntax element for reconstructing the image. The decoder 120 may reconstruct the image based on the syntax element.

Operations of the image decoding apparatus 100 will be described in detail with reference to FIG. 2.

FIG. 2 is a flowchart of an image decoding method according to an embodiment.

According to an embodiment of the present disclosure, the receiver 110 receives a bitstream.

The image decoding apparatus 100 obtains, from a bitstream, a bin string corresponding to a split shape mode of a coding unit (operation 210). The image decoding apparatus 100 determines a split rule of the coding unit (operation 220). Also, the image decoding apparatus 100 splits the coding unit into a plurality of coding units, based on at least one of the bin string corresponding to the split shape mode and the split rule (operation 230). The image decoding apparatus 100 may determine an allowable first range of a size of the coding unit, according to a ratio of the width and the height of the coding unit, so as to determine the split rule. The image decoding apparatus 100 may determine an allowable second range of the size of the coding unit, according to the split shape mode of the coding unit, so as to determine the split rule.

Hereinafter, splitting of a coding unit will be described in detail according to an embodiment of the present disclosure.

First, one picture may be split into one or more slices or one or more tiles. One slice or one tile may be a sequence of one or more CTUs. There is a coding tree block (CTB) conceptually compared to a CTU.

The CTB denotes NxN blocks including NxN samples (N is an integer). Each color component may be split into one or more CTBs.

When a picture has three sample arrays (sample arrays for Y, Cr, and Cb components), a CTU includes a CTB of a luma sample, two corresponding CTBs of chroma samples, and syntax structures used to encode the luma sample and the chroma samples. When a picture is a monochrome picture, a CTU includes a CTB of a monochrome sample and syntax structures used to encode the monochrome samples. When a picture is a picture encoded in color planes separated according to color components, a CTU includes syntax structures used to encode the picture and samples of the picture.

One CTB may be split into MxN coding blocks including MxN samples (M and N are integers).

When a picture has sample arrays for Y, Cr, and Cb components, a coding unit (CU) includes a coding block of a luma sample, two corresponding coding blocks of chroma samples, and syntax structures used to encode the luma sample and the chroma samples. When a picture is a monochrome picture, a coding unit includes a coding block of a monochrome sample and syntax structures used to encode the monochrome samples. When a picture is a picture encoded in color planes separated according to color components, a coding unit includes syntax structures used to encode the picture and samples of the picture.

As described above, a CTB and a CTU are conceptually distinguished from each other, and a coding block and a coding unit are conceptually distinguished from each other. That is, a (largest) coding unit refers to a data structure including a (largest) coding block including a corresponding sample and a syntax structure corresponding to the (largest) coding block. However, because it is understood by one of ordinary skill in the art that a (largest) coding unit or a (largest) coding block refers to a block of a certain size including a certain number of samples, a CTB and a CTU, or a coding block and a coding unit are mentioned in the following specification without being distinguished unless otherwise described.

An image may be split into CTUs. A size of each CTU may be determined based on information obtained from a bitstream. A shape of each CTU may be a square shape of the same size. However, an embodiment is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma CTU and a luma CTB that may be split into two. Accordingly, when the information about the maximum size of the luma coding block that may be split into two and the information about the luma block size difference obtained from the bitstream are combined with each other, a size of the luma CTU may be determined. A size of a chroma CTU may be determined by using the size of the luma CTU. For example, when a Y: Cb: Cr ratio is 4:2:0 according to a color format, a size of a chroma block may be half a size of a luma block, and a size of a chroma CTU may be half a size of a luma CTU.

According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum size of the luma coding block that is ternary splittable in an I-picture may be 32x32, and the maximum size of the luma coding block that is ternary splittable in a P-picture or a B-picture may be 64x64.

Also, a CTU may be hierarchically split into coding units based on split shape mode information obtained from a bitstream. At least one of information indicating whether quad splitting is performed, information indicating whether multi-splitting is performed, split direction information, and split type information may be obtained as the split shape mode information from the bitstream.

For example, the information indicating whether quad splitting is performed may indicate whether a current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode SPLIT_TT_VER.

The image decoding apparatus 100 may obtain, from the bitstream, the split shape mode information from one bin string. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad-split a coding unit, whether not to split a coding unit, a split direction, and a split type, based on one bin string.

The coding unit may be smaller than or same as the CTU. For example, because a CTU is a coding unit having a maximum size, the CTU is one of coding units. When split shape mode information about a CTU indicates that splitting is not performed, a coding unit determined in the CTU has the same size as that of the CTU. When split shape code information about a CTU indicates that splitting is performed, the CTU may be split into coding units. Also, when split shape mode information about a coding unit indicates that splitting is performed, the coding unit may be split into smaller coding units. However, the splitting of the image is not limited thereto, and the CTU and the coding unit may not be distinguished. The splitting of the coding unit will be described in detail with reference to FIGS. 3 through 16.

Also, one or more prediction blocks for prediction may be determined from a coding unit. The prediction block may be the same as or smaller than the coding unit. Also, one or more transform blocks for transform may be determined from a coding unit. The transform block may be the same as or smaller than the coding unit.

The shapes and sizes of the transform block and prediction block may not be related to each other.

In another embodiment, prediction may be performed by using a coding unit as a prediction unit. Also, transform may be performed by using a coding unit as a transform block.

The splitting of the coding unit will be described in detail with reference to FIGS. 3 through 16. A current block and a neighboring block of the present disclosure may indicate one of the CTU, the coding unit, the prediction block, and the transform block. Also, the current block of the current coding unit is a block that is currently being decoded or encoded or a block that is currently being split. The neighboring block may be a block reconstructed before the current block. The neighboring block may be adjacent to the current block spatially or temporally. The neighboring block may be located at one of the lower left, left, upper left, top, upper right, right, and lower right of the current block.

FIG. 3 illustrates a process, performed by an image decoding apparatus, of determining at least one coding unit by splitting a current coding unit, according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width and height, or a size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information of the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit to be a non-square shape. When the shape of the coding unit is non-square, the image decoding apparatus 100 may determine the ratio of the width and height among the block shape information of the coding unit to be at least one of 1:2, 2:1, 1:4, 4:1, 1:8, 8:1, 1:16, 16:1, 1:32, and 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment, the image decoding apparatus 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the image encoding apparatus 2200 may determine pre-agreed split shape mode information, based on the block shape information. The image decoding apparatus 100 may determine the pre-agreed split shape mode information with respect to a CTU or a smallest coding unit. For example, the image decoding apparatus 100 may determine split shape mode information with respect to the CTU to be a quad split. Also, the image decoding apparatus 100 may determine split shape mode information regarding the smallest coding unit to be "not to perform splitting". In particular, the image decoding apparatus 100 may determine the size of the CTU to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the CTU of a 256x256 size, based on the split shape mode information. Also, the image decoding apparatus 100 may determine the size of the smallest coding unit to be 4x4. The image decoding apparatus 100 may obtain split shape mode information indicating "not to perform splitting" with respect to the smallest coding unit.

According to an embodiment, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may not split a coding unit 310a having the same size as the current coding unit 300, based on the split shape mode information indicating not to perform splitting, or may determine coding units 310b, 310c, 310d, 310e, or 310f split based on the split shape mode information indicating a certain splitting method.

Referring to FIG. 3, according to an embodiment, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment, the image decoding apparatus 100 may determine three coding units 310e obtained by splitting the current coding unit 300 in a vertical direction, based on the split shape mode information indicating to perform ternary-splitting in a vertical direction. The image decoding apparatus 100 may determine three coding units 310f obtained by splitting the current coding unit 300 in a horizontal direction, based on the split shape mode information indicating to perform ternary-splitting in a horizontal direction. However, splitting methods of the square coding unit are not limited to the above-described methods, and the split shape mode information may indicate various methods. Certain splitting methods of splitting the square coding unit will be described in detail below in relation to various embodiments.

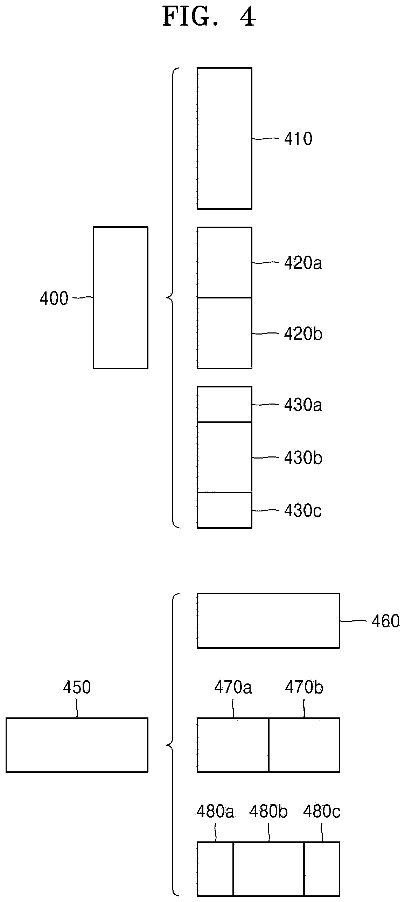

FIG. 4 illustrates a process, performed by an image decoding apparatus, of determining at least one coding unit by splitting a non-square coding unit, according to an embodiment.

According to an embodiment, the image decoding apparatus 100 may use block shape information indicating that a current coding unit has a non-square shape. The image decoding apparatus 100 may determine whether not to split the non-square current coding unit or whether to split the non-square current coding unit by using a certain splitting method, based on split shape mode information. Referring to FIG. 4, when the block shape information of a current coding unit 400 or 450 indicates a non-square shape, the image decoding apparatus 100 may determine a coding unit 410 or 460 having the same size as the current coding unit 400 or 450, based on the split shape mode information indicating not to perform splitting, or may determine coding units 420a and 420b, 430a to 430c, 470a and 470b, or 480a to 480c split based on the split shape mode information indicating a certain splitting method. Certain splitting methods of splitting a non-square coding unit will be described in detail below in relation to various embodiments.

According to an embodiment, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment, when the image decoding apparatus 100 splits the non-square current coding unit 400 or 450 based on the split shape mode information, the image decoding apparatus 100 may consider the location of a long side of the non-square current coding unit 400 or 450 to split a current coding unit. For example, the image decoding apparatus 100 may determine a plurality of coding units by splitting a long side of the current coding unit 400 or 450, based on the shape of the current coding unit 400 or 450.

According to an embodiment, when the split shape mode information indicates to split (ternary-split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment, a ratio of the width and height of the current coding unit 400 or 450 may be 4:1 or 1:4. When the ratio of the width and height is 4:1, the block shape information may be a horizontal direction because the length of the width is longer than the length of the height. When the ratio of the width and height is 1:4, the block shape information may be a vertical direction because the length of the width is shorter than the length of the height. The image decoding apparatus 100 may determine to split a current coding unit into the odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a to 430c by splitting the current coding unit 400 in the horizontal direction. Also, when the current coding unit 450 is in the horizontal direction, the image decoding apparatus 100 may determine the coding units 480a to 480c by splitting the current coding unit 450 in the vertical direction.

According to an embodiment, the image decoding apparatus 100 may determine the odd number of coding units included in the current coding unit 400 or 450, and not all the determined coding units may have the same size. For example, a certain coding unit 430b or 480b from among the determined odd number of coding units 430a, 430b, and 430c, or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c, or 480a, 480b, and 480c may have different sizes.

According to an embodiment, when the split shape mode information indicates to split a coding unit into the odd number of blocks, the image decoding apparatus 100 may determine the odd number of coding units included in the current coding unit 400 or 450, and in addition, may put a certain restriction on at least one coding unit from among the odd number of coding units generated by splitting the current coding unit 400 or 450. Referring to FIG. 4, the image decoding apparatus 100 may set a decoding process regarding the coding unit 430b or 480b located at the center among the three coding units 430a, 430b, and 430c or 480a, 480b, and 480c generated as the current coding unit 400 or 450 is split to be different from that of the other coding units 430a and 430c, or 480a or 480c. For example, the image decoding apparatus 100 may restrict the coding unit 430b or 480b at the center location to be no longer split or to be split only a certain number of times, unlike the other coding units 430a and 430c, or 480a and 480c.

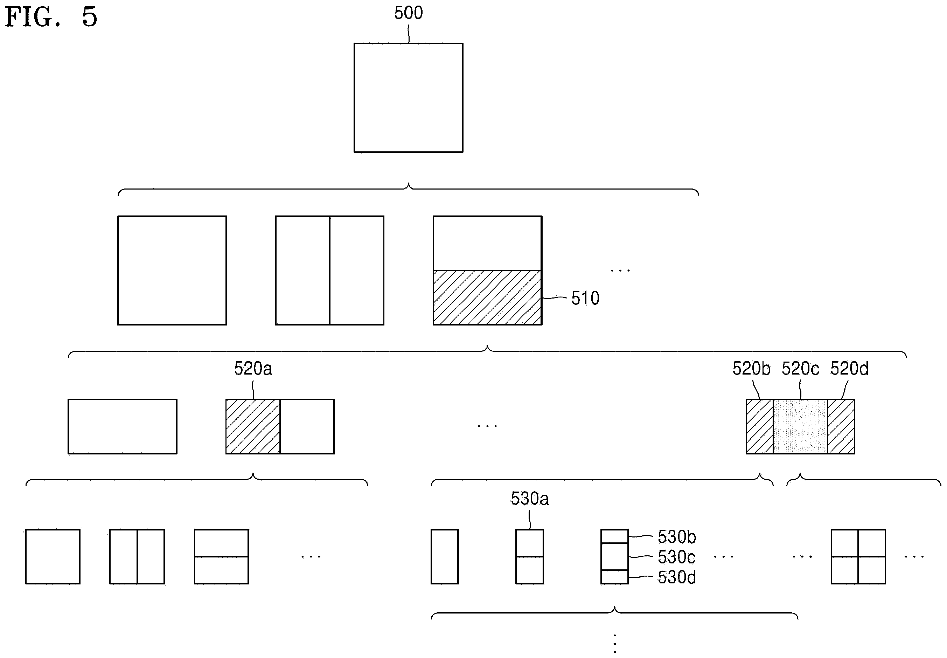

FIG. 5 illustrates a process, performed by an image decoding apparatus, of splitting a coding unit based on at least one of block shape information and split shape mode information, according to an embodiment.

According to an embodiment, the image decoding apparatus 100 may determine to split or not to split a square first coding unit 500 into coding units, based on at least one of the block shape information and the split shape mode information. According to an embodiment, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment are terms used to understand a relation before and after splitting a coding unit. For example, a second coding unit may be determined by splitting a first coding unit, and a third coding unit may be determined by splitting the second coding unit. It will be understood that the structure of the first coding unit, the second coding unit, and the third coding unit follows the above descriptions.

According to an embodiment, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, or 520b, 520c, and 520d based on the split shape mode information. The image decoding apparatus 100 may obtain the split shape mode information, and may obtain a plurality of various-shaped second coding units (e.g., 510) by splitting the first coding unit 500, based on the obtained split shape mode information, and the second coding unit 510 may be split by using a splitting method of the first coding unit 500 based on the split shape mode information. According to an embodiment, when the first coding unit 500 is split into the second coding units 510 based on the split shape mode information of the first coding unit 500, the second coding unit 510 may also be split into the third coding units 520a, or 520b, 520c, and 520d based on the split shape mode information of the second coding unit 510. That is, a coding unit may be recursively split based on the split shape mode information of each coding unit. Therefore, a square coding unit may be determined by splitting a non-square coding unit, and a non-square coding unit may be determined by recursively splitting the square coding unit.

Referring to FIG. 5, a certain coding unit from among the odd number of third coding units 520b, 520c, and 520d determined by splitting the non-square second coding unit 510 (e.g., a coding unit at a center location or a square coding unit) may be recursively split. According to an embodiment, the square third coding unit 520c from among the odd number of third coding units 520b, 520c, and 520d may be split in a horizontal direction into a plurality of fourth coding units. A non-square fourth coding unit 530b or 530d from among a plurality of fourth coding units 530a, 530b, 530c, and 530d may be split into a plurality of coding units again. For example, the non-square fourth coding unit 530b or 530d may be split into the odd number of coding units again. A method that may be used to recursively split a coding unit will be described below in relation to various embodiments.

According to an embodiment, the image decoding apparatus 100 may split each of the third coding units 520a, or 520b, 520c, and 520d into coding units, based on the split shape mode information. Also, the image decoding apparatus 100 may determine not to split the second coding unit 510 based on the split shape mode information. According to an embodiment, the image decoding apparatus 100 may split the non-square second coding unit 510 into the odd number of third coding units 520b, 520c, and 520d. The image decoding apparatus 100 may put a certain restriction on a certain third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a certain splitting method (e.g., split into only four coding units or split by using a splitting method of the second coding unit 510), or to be split only a certain number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment, the image decoding apparatus 100 may obtain the split shape mode information, which is used to split a current coding unit, from a certain location in the current coding unit.

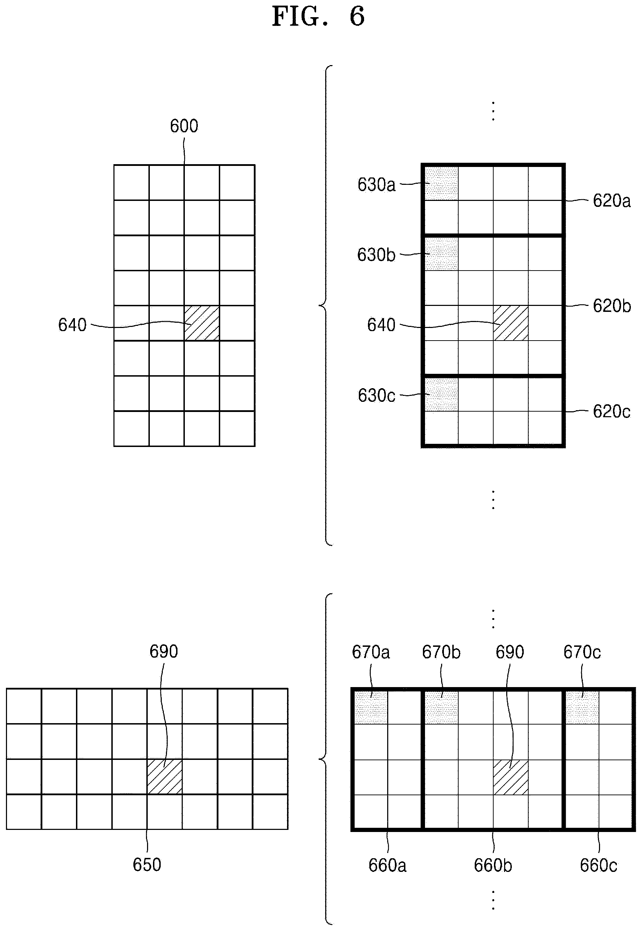

FIG. 6 illustrates a method, performed by an image decoding apparatus, of determining a certain coding unit from among an odd number of coding units, according to an embodiment.

Referring to FIG. 6, split shape mode information of a current coding unit 600 or 650 may be obtained from a sample of a certain location (e.g., a sample 640 or 690 of a center location) from among a plurality of samples included in the current coding unit 600 or 650. However, the certain location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, and lower right locations). The image decoding apparatus 100 may obtain the split shape mode information from the certain location and may determine to split or not to split the current coding unit into various-shaped and various-sized coding units.

According to an embodiment, when the current coding unit is split into a certain number of coding units, the image decoding apparatus 100 may select one of the coding units. Various methods may be used to select one of a plurality of coding units, as will be described below in relation to various embodiments.

According to an embodiment, the image decoding apparatus 100 may split the current coding unit into a plurality of coding units, and may determine a coding unit at a certain location.

According to an embodiment, image decoding apparatus 100 may use information indicating locations of the odd number of coding units, to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of certain samples included in the coding units 620a, 620b, and 620c. In detail, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c.

According to an embodiment, the information indicating the locations of the upper left samples 630a, 630b, and 630c, which are included in the coding units 620a, 620b, and 620c, respectively, may include information about locations or coordinates of the coding units 620a, 620b, and 620c in a picture. According to an embodiment, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment, information indicating the location of the upper left sample 630a of the upper coding unit 620a may include coordinates (xa, ya), information indicating the location of the upper left sample 630b of the middle coding unit 620b may include coordinates (xb, yb), and information indicating the location of the upper left sample 630c of the lower coding unit 620c may include coordinates (xc, yc). The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or may use coordinates (dxb, dyb) indicating a relative location of the upper left sample 630b of the middle coding unit 620b and coordinates (dxc, dyc) indicating a relative location of the upper left sample 630c of the lower coding unit 620c with reference to the location of the upper left sample 630a of the upper coding unit 620a. A method of determining a coding unit at a certain location by using coordinates of a sample included in the coding unit, as information indicating a location of the sample, is not limited to the above-described method, and may include various arithmetic methods capable of using the coordinates of the sample.

According to an embodiment, the image decoding apparatus 100 may split the current coding unit 600 into a plurality of coding units 620a, 620b, and 620c, and may select one of the coding units 620a, 620b, and 620c based on a certain criterion. For example, the image decoding apparatus 100 may select the coding unit 620b, which has a size different from that of the others, from among the coding units 620a, 620b, and 620c.

According to an embodiment, the image decoding apparatus 100 may determine the width or height of each of the coding units 620a, 620b, and 620c by using the coordinates (xa, ya) that is the information indicating the location of the upper left sample 630a of the upper coding unit 620a, the coordinates (xb, yb) that is the information indicating the location of the upper left sample 630b of the middle coding unit 620b, and the coordinates (xc, yc) that is the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment, the image decoding apparatus 100 may determine the width of the upper coding unit 620a to be the width of the current coding unit 600. The image decoding apparatus 100 may determine the height of the upper coding unit 620a to be yb-ya. According to an embodiment, the image decoding apparatus 100 may determine the width of the middle coding unit 620b to be the width of the current coding unit 600. The image decoding apparatus 100 may determine the height of the middle coding unit 620b to be yc-yb. According to an embodiment, the image decoding apparatus 100 may determine the width or height of the lower coding unit 620c by using the width or height of the current coding unit 600 or the widths or heights of the upper and middle coding units 620a and 620b. The image decoding apparatus 100 may determine a coding unit, which has a size different from that of the others, based on the determined widths and heights of the coding units 620a to 620c. Referring to FIG. 6, the image decoding apparatus 100 may determine the middle coding unit 620b, which has a size different from the size of the upper and lower coding units 620a and 620c, as the coding unit of the certain location. However, the above-described method, performed by the image decoding apparatus 100, of determining a coding unit having a size different from the size of the other coding units merely corresponds to an example of determining a coding unit at a certain location by using the sizes of coding units, which are determined based on coordinates of samples, and thus, various methods of determining a coding unit at a certain location by comparing the sizes of coding units, which are determined based on coordinates of certain samples, may be used.

The image decoding apparatus 100 may determine the width or height of each of the coding units 660a, 660b, and 660c by using the coordinates (xd, yd) that is information indicating the location of an upper left sample 670a of the left coding unit 660a, the coordinates (xe, ye) that is information indicating the location of an upper left sample 670b of the middle coding unit 660b, and the coordinates (xf, yf) that is information indicating a location of the upper left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment, the image decoding apparatus 100 may determine the width of the left coding unit 660a to be xe-xd. The image decoding apparatus 100 may determine the height of the left coding unit 660a to be the height of the current coding unit 650. According to an embodiment, the image decoding apparatus 100 may determine the width of the middle coding unit 660b to be xf-xe. The image decoding apparatus 100 may determine the height of the middle coding unit 660b to be the height of the current coding unit 650. According to an embodiment, the image decoding apparatus 100 may determine the width or height of the right coding unit 660c by using the width or height of the current coding unit 650 or the widths or heights of the left and middle coding units 660a and 660b. The image decoding apparatus 100 may determine a coding unit, which has a size different from that of the others, based on the determined widths and heights of the coding units 660a to 660c. Referring to FIG. 6, the image decoding apparatus 100 may determine the middle coding unit 660b, which has a size different from the sizes of the left and right coding units 660a and 660c, as the coding unit of the certain location. However, the above-described method, performed by the image decoding apparatus 100, of determining a coding unit having a size different from the size of the other coding units merely corresponds to an example of determining a coding unit at a certain location by using the sizes of coding units, which are determined based on coordinates of samples, and thus, various methods of determining a coding unit at a certain location by comparing the sizes of coding units, which are determined based on coordinates of certain samples, may be used.

However, locations of samples considered to determine locations of coding units are not limited to the above-described upper left locations, and information about arbitrary locations of samples included in the coding units may be used.

According to an embodiment, the image decoding apparatus 100 may select a coding unit at a certain location from among an odd number of coding units determined by splitting the current coding unit, considering the shape of the current coding unit. For example, when the current coding unit has a non-square shape, a width of which is longer than a height, the image decoding apparatus 100 may determine the coding unit at the certain location in a horizontal direction. That is, the image decoding apparatus 100 may determine one of coding units, locations of which are differently set in the horizontal direction, and put a restriction on the coding unit. When the current coding unit has a non-square shape, a height of which is longer than a width, the image decoding apparatus 100 may determine the coding unit at the certain location in a vertical direction. That is, the image decoding apparatus 100 may determine one of coding units, locations of which are differently set in the vertical direction, and may put a restriction on the coding unit.

According to an embodiment, the image decoding apparatus 100 may use information indicating respective locations of an even number of coding units, to determine the coding unit at the certain location from among the even number of coding units. The image decoding apparatus 100 may determine an even number of coding units by splitting (binary-splitting) the current coding unit, and may determine the coding unit at the certain location by using the information about the locations of the even number of coding units. An operation related thereto may correspond to the operation of determining a coding unit at a certain location (e.g., a center location) from among an odd number of coding units, which has been described in detail above in relation to FIG. 6, and thus, detailed descriptions thereof are not provided here.

According to an embodiment, when a non-square current coding unit is split into a plurality of coding units, certain information about a coding unit at a certain location may be used in a splitting operation to determine the coding unit at the certain location from among the plurality of coding units. For example, the image decoding apparatus 100 may use at least one of block shape information and split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, based on a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment, certain information for identifying the coding unit at the certain location may be obtained from a certain sample included in a coding unit to be determined. Referring to FIG. 6, the image decoding apparatus 100 may use the split shape mode information, which is obtained from a sample at a certain location in the current coding unit 600 (e.g., a sample at a center location of the current coding unit 600) to determine a coding unit at a certain location from among the plurality of the coding units 620a, 620b, and 620c determined by splitting the current coding unit 600 (e.g., a coding unit at a center location from among a plurality of split coding units). That is, the image decoding apparatus 100 may determine the sample at the certain location by considering a block shape of the current coding unit 600, determine the coding unit 620b including a sample, from which certain information (e.g., the split shape mode information) may be obtained, from among the plurality of coding units 620a, 620b, and 620c determined by splitting the current coding unit 600, and may put a certain restriction on the coding unit 620b. Referring to FIG. 6, according to an embodiment, the image decoding apparatus 100 may determine the sample 640 at the center location of the current coding unit 600 as the sample from which the certain information may be obtained, and may put a certain restriction on the coding unit 620b including the sample 640, in a decoding operation. However, the location of the sample from which the certain information may be obtained is not limited to the above-described location, and may include arbitrary locations of samples included in the coding unit 620b to be determined for a restriction.

According to an embodiment, the location of the sample from which the certain information may be obtained may be determined based on the shape of the current coding unit 600. According to an embodiment, the block shape information may indicate whether the current coding unit has a square or non-square shape, and the location of the sample from which the certain information may be obtained may be determined based on the shape. For example, the image decoding apparatus 100 may determine a sample located on a boundary for splitting at least one of a width and height of the current coding unit in half, as the sample from which the certain information may be obtained, by using at least one of information about the width of the current coding unit and information about the height of the current coding unit. As another example, when the block shape information of the current coding unit indicates a non-square shape, the image decoding apparatus 100 may determine one of samples including a boundary for splitting a long side of the current coding unit in half, as the sample from which the predetermined information may be obtained.

According to an embodiment, when the current coding unit is split into a plurality of coding units, the image decoding apparatus 100 may use the split shape mode information to determine a coding unit at a certain location from among the plurality of coding units. According to an embodiment, the image decoding apparatus 100 may obtain the split shape mode information from a sample at a certain location in a coding unit, and split the plurality of coding units, which are generated by splitting the current coding unit, by using the split shape mode information, which is obtained from the sample of the certain location in each of the plurality of coding units. That is, a coding unit may be recursively split based on the split shape mode information, which is obtained from the sample at the certain location in each coding unit. An operation of recursively splitting a coding unit has been described above in relation to FIG. 5, and thus, detailed descriptions thereof will not be provided here.

According to an embodiment, the image decoding apparatus 100 may determine one or more coding units by splitting the current coding unit, and may determine an order of decoding the one or more coding units, based on a certain block (e.g., the current coding unit).

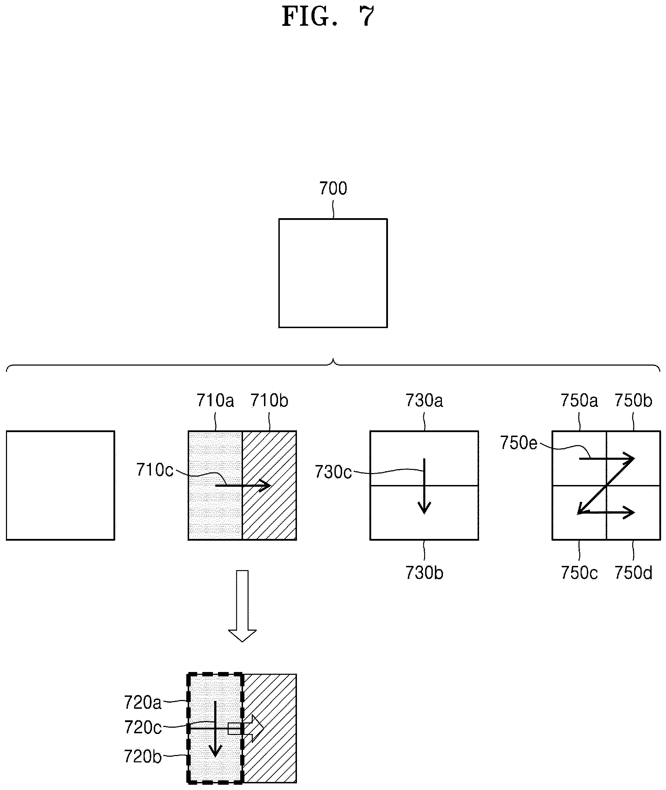

FIG. 7 illustrates an order of processing a plurality of coding units when an image decoding apparatus determines the plurality of coding units by splitting a current coding unit, according to an embodiment.

According to an embodiment, the image decoding apparatus 100 may determine second coding units 710a and 710b by splitting a first coding unit 700 in a vertical direction, determine second coding units 730a and 730b by splitting the first coding unit 700 in a horizontal direction, or determine second coding units 750a to 750d by splitting the first coding unit 700 in vertical and horizontal directions, based on split shape mode information.

Referring to FIG. 7, the image decoding apparatus 100 may determine to process the second coding units 710a and 710b, which are determined by splitting the first coding unit 700 in a vertical direction, in a horizontal direction order 710c. The image decoding apparatus 100 may determine to process the second coding units 730a and 730b, which are determined by splitting the first coding unit 700 in a horizontal direction, in a vertical direction order 730c. The image decoding apparatus 100 may determine to process the second coding units 750a to 750d, which are determined by splitting the first coding unit 700 in vertical and horizontal directions, in a certain order for processing coding units in a row and then processing coding units in a next row (e.g., in a raster scan order or Z-scan order 750e).

According to an embodiment, the image decoding apparatus 100 may recursively split coding units. Referring to FIG. 7, the image decoding apparatus 100 may determine the plurality of coding units 710a and 710b, 730a and 730b, or 750a to 750d by splitting the first coding unit 700, and recursively split each of the determined plurality of coding units 710a and 710b, 730a and 730b, or 750a to 750d. A splitting method of the plurality of coding units 710a and 710b, 730a and 730b, or 750a to 750d may correspond to a splitting method of the first coding unit 700. As such, each of the plurality of coding units 710a and 710b, 730a and 730b, or 750a to 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment, the image decoding apparatus 100 may determine third coding units 720a and 720b by splitting the left second coding unit 710a in a horizontal direction, and may not split the right second coding unit 710b.

According to an embodiment, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and various methods may be used to independently process coding units, which are split and determined to have various shapes, in a certain order.

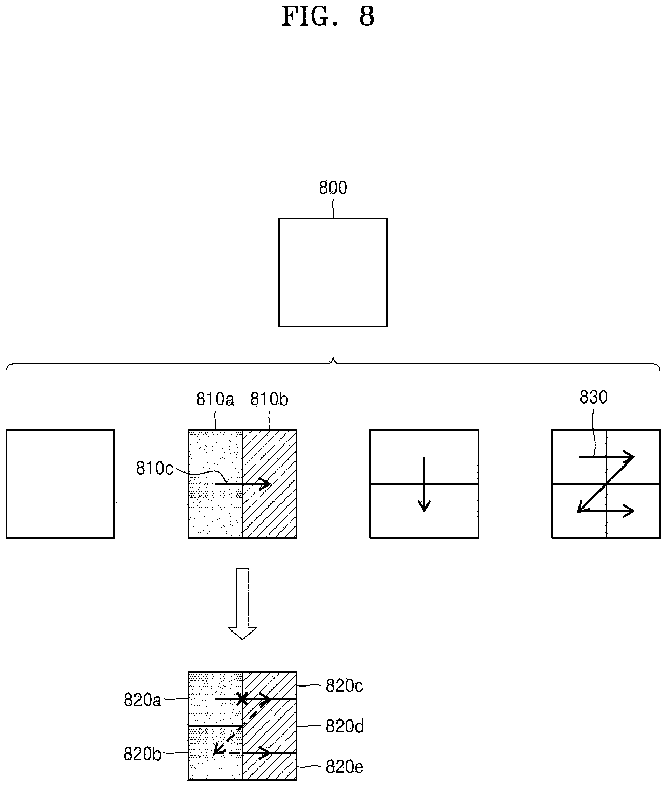

FIG. 8 illustrates a process, performed by an image decoding apparatus, of determining that a current coding unit is to be split into an odd number of coding units, when the coding units are not processable in a certain order, according to an embodiment.

According to an embodiment, the image decoding apparatus 100 may determine that the current coding unit is split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c to 820e. According to an embodiment, the image decoding apparatus 100 may determine the plurality of third coding units 820a and 820b by splitting the left second coding unit 810a in a horizontal direction, and may split the right second coding unit 810b into the odd number of third coding units 820c to 820e.

According to an embodiment, the image decoding apparatus 100 may determine whether any coding unit is split into an odd number of coding units, by determining whether the third coding units 820a and 820b, and 820c to 820e are processable in a certain order. Referring to FIG. 8, the image decoding apparatus 100 may determine the third coding units 820a and 820b, and 820c to 820e by recursively splitting the first coding unit 800. The image decoding apparatus 100 may determine whether any of the first coding unit 800, the second coding units 810a and 810b, and the third coding units 820a and 820b, and 820c to 820e are split into an odd number of coding units, based on at least one of the block shape information and the split shape mode information. For example, the right second coding unit 810b among the second coding units 810a and 810b may be split into an odd number of third coding units 820c, 820d, and 820e. A processing order of a plurality of coding units included in the first coding unit 800 may be a certain order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the certain order.

According to an embodiment, the image decoding apparatus 100 may determine whether the third coding units 820a and 820b, and 820c to 820e included in the first coding unit 800 satisfy the condition for processing in the certain order, and the condition relates to whether at least one of a width and height of the second coding units 810a and 810b is split in half along a boundary of the third coding units 820a and 820b, and 820c to 820e. For example, the third coding units 820a and 820b determined when the height of the left second coding unit 810a of the non-square shape is split in half may satisfy the condition. It may be determined that the third coding units 820c to 820e do not satisfy the condition because the boundaries of the third coding units 820c to 820e determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is split into an odd number of coding units, based on a result of the determination. According to an embodiment, when a coding unit is split into an odd number of coding units, the image decoding apparatus 100 may put a certain restriction on a coding unit at a certain location from among the split coding units. The restriction or the certain location has been described above in relation to various embodiments, and thus, detailed descriptions thereof will not be provided herein.

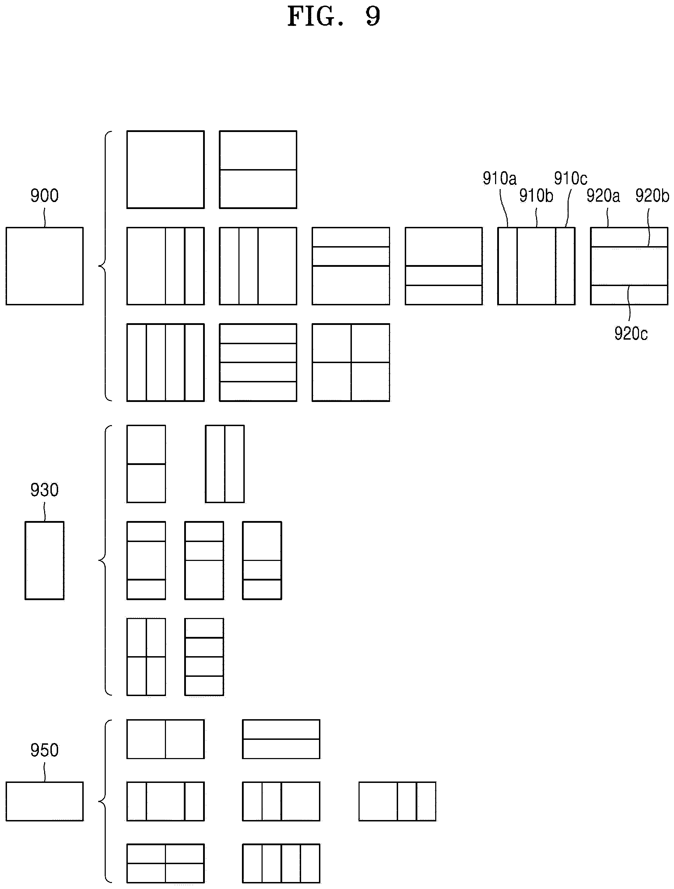

FIG. 9 illustrates a process, performed by an image decoding apparatus, of determining at least one coding unit by splitting a first coding unit, according to an embodiment.

According to an embodiment, the image decoding apparatus 100 may split the first coding unit 900, based on split shape mode information, which is obtained through the receiver 110. The square first coding unit 900 may be split into four square coding units, or may be split into a plurality of non-square coding units. For example, referring to FIG. 9, when the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction.

According to an embodiment, the image decoding apparatus 100 may determine whether the second coding units 910a, 910b, 910c, 920a, 920b, and 920c included in the first coding unit 900 satisfy a condition for processing in a certain order, and the condition relates to whether at least one of a width and height of the first coding unit 900 is split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the certain order. In addition, because boundaries of the second coding units 920a, 920b, and 920c determined by splitting the square first coding unit 900 in a horizontal direction do not split the width of the first coding unit 900 in half, it may be determined that the first coding unit 900 does not satisfy the condition for processing in the certain order. When the condition is not satisfied as described above, the image decoding apparatus 100 may decide disconnection of a scan order, and may determine that the first coding unit 900 is split into an odd number of coding units, based on a result of the decision. According to an embodiment, when a coding unit is split into an odd number of coding units, the image decoding apparatus 100 may put a certain restriction on a coding unit at a certain location from among the split coding units. The restriction or the certain location has been described above in relation to various embodiments, and thus, detailed descriptions thereof will not be provided herein.

According to an embodiment, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

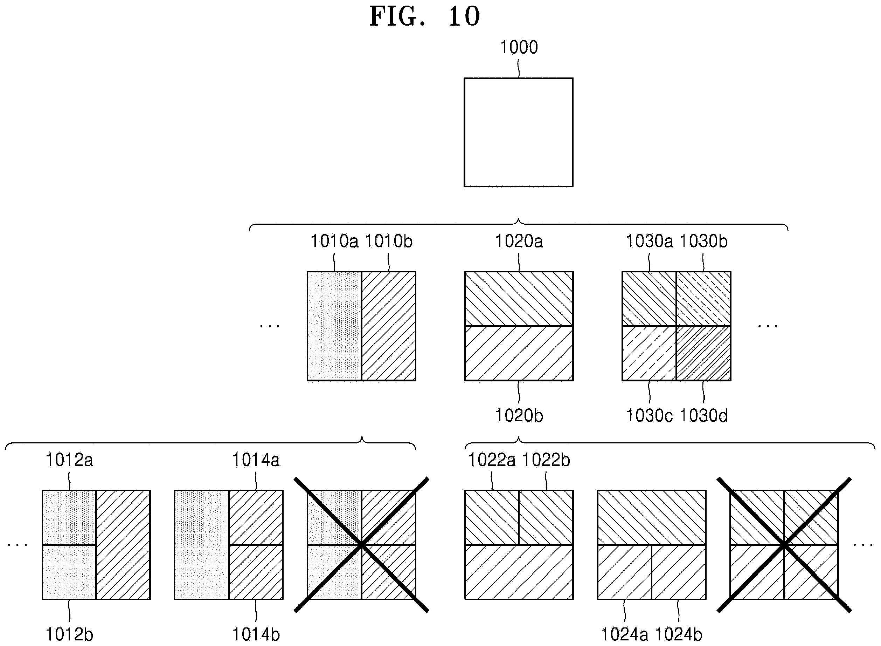

FIG. 10 illustrates that a shape into which a second coding unit is splittable is restricted when the second coding unit having a non-square shape, which is determined when an image decoding apparatus splits a first coding unit, satisfies a certain condition, according to an embodiment.

According to an embodiment, the image decoding apparatus 100 may determine to split the square first coding unit 1000 into non-square second coding units 1010a and 1010b or 1020a and 1020b, based on split shape mode information, which is obtained by the receiver 110. The second coding units 1010a and 1010b or 1020a and 1020b may be independently split. As such, the image decoding apparatus 100 may determine to split or not to split each of the second coding units 1010a and 1010b or 1020a and 1020b into a plurality of coding units, based on the split shape mode information of each of the second coding units 1010a and 1010b or 1020a and 1020b. According to an embodiment, the image decoding apparatus 100 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in a same direction, because the left and right second coding units 1010a and 1010b are independently split in a horizontal direction, the third coding units 1012a and 1012b or 1014a and 1014b may be determined. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment, the image decoding apparatus 100 may determine third coding units 1022a and 1022b or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

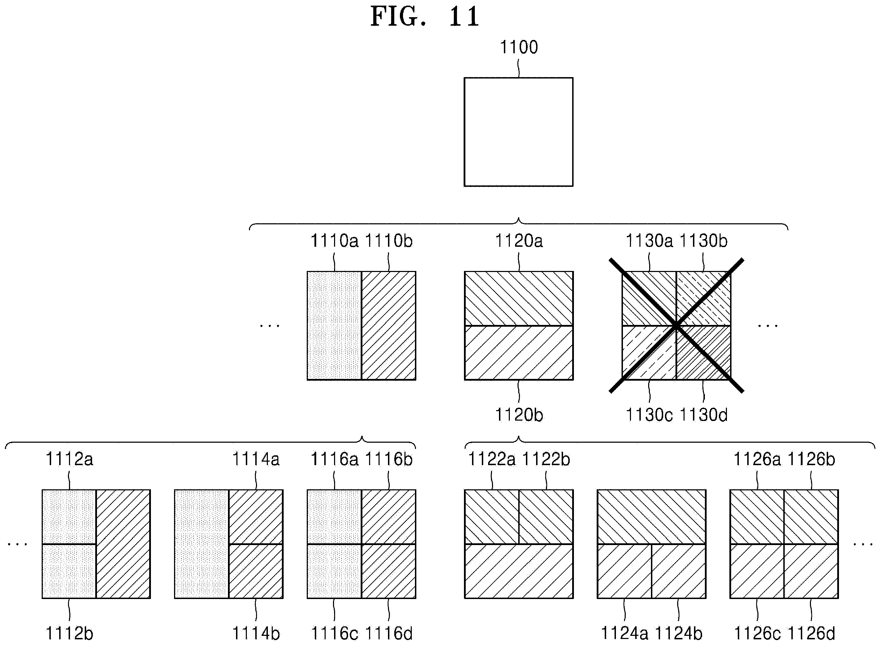

FIG. 11 illustrates a process, performed by an image decoding apparatus, of splitting a square coding unit when split shape mode information is unable to indicate that the square coding unit is split into four square coding units, according to an embodiment.

According to an embodiment, the image decoding apparatus 100 may determine second coding units 1110a and 1110b or 1120a and 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. The image decoding apparatus 100 may determine the non-square second coding units 1110a and 1110b or 1120a and 1120b, etc., based on the split shape mode information.

According to an embodiment, the image decoding apparatus 100 may independently split the non-square second coding units 1110a and 1110b or 1120a and 1120b, etc. Each of the second coding units 1110a and 1110b or 1120a and 1120b, etc. may be recursively split in a certain order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both of the upper and lower second coding units 1120a and 1120b in a vertical direction. In this case, coding units having the same shape as the four square second coding units 1130a, 1130b, 1130c, and 1130d split from the first coding unit 1100 may be determined.

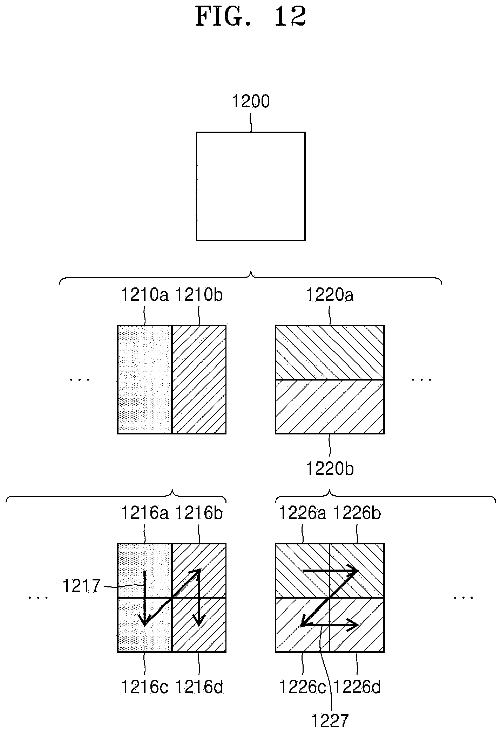

FIG. 12 illustrates that a processing order between a plurality of coding units may be changed depending on a process of splitting a coding unit, according to an embodiment.

According to an embodiment, the image decoding apparatus 100 may split a first coding unit 1200, based on split shape mode information. When a block shape indicates a square shape and the split shape mode information indicates to split the first coding unit 1200 in at least one of horizontal and vertical directions, the image decoding apparatus 100 may determine second coding units 1210a and 1210b or 1220a and 1220b, etc. by splitting the first coding unit 1200. Referring to FIG. 12, the non-square second coding units 1210a and 1210b or 1220a and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. An operation of splitting the second coding units 1210a and 1210b or 1220a and 1220b has been described above in relation to FIG. 11, and thus, detailed descriptions thereof will not be provided herein.

According to an embodiment, the image decoding apparatus 100 may process coding units in a certain order. An operation of processing coding units in a certain order has been described above in relation to FIG. 7, and thus, detailed descriptions thereof will not be provided herein. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment, the image decoding apparatus 100 may determine processing orders of the third coding units 1216a, 1216b, 1216c, and 1216d, and 1226a, 1226b, 1226c, and 1226d based on a splitting method of the first coding unit 1200.

According to an embodiment, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1920b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape information, the image decoding apparatus 100 may process a plurality of coding units in different orders even when the coding units are eventually determined to be the same shape.

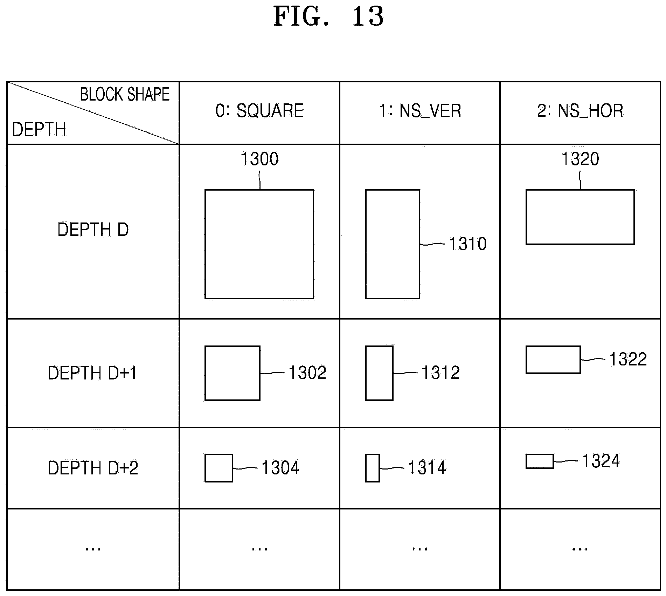

FIG. 13 illustrates a process of determining a depth of a coding unit when a shape and size of the coding unit change, when the coding unit is recursively split such that a plurality of coding units are determined, according to an embodiment.

According to an embodiment, the image decoding apparatus 100 may determine the depth of the coding unit, based on a certain criterion. For example, the certain criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. In the following description, a coding unit having an increased depth is expressed as a coding unit of a lower depth.

Referring to FIG. 13, according to an embodiment, the image decoding apparatus 100 may determine a second coding unit 1302 and a third coding unit 1304 of lower depths by splitting a square first coding unit 1300 based on block shape information indicating a square shape (for example, the block shape information may be expressed as '0: SQUARE'). Assuming that the size of the square first coding unit 1300 is 2Nx2N, the second coding unit 1302 determined by splitting a width and height of the first coding unit 1300 in 1/2 may have a size of NxN. Furthermore, the third coding unit 1304 determined by splitting a width and height of the second coding unit 1302 in 1/2 may have a size of N/2xN/2. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (for example, the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit 1302, 1312, or 1322 by splitting at least one of a width and height of the first coding unit 1310 having a size of Nx2N. That is, the image decoding apparatus 100 may determine the second coding unit 1302 having a size of NxN or the second coding unit 1322 having a size of NxN/2 by splitting the first coding unit 1310 in a horizontal direction, or may determine the second coding unit 1312 having a size of N/2xN by splitting the first coding unit 1310 in horizontal and vertical directions.

According to an embodiment, the image decoding apparatus 100 may determine the second coding unit 1302, 1312, or 1322 by splitting at least one of a width and height of the first coding unit 1320 having a size of 2NxN. That is, the image decoding apparatus 100 may determine the second coding unit 1302 having a size of NxN or the second coding unit 1312 having a size of N/2xN by splitting the first coding unit 1320 in a vertical direction, or may determine the second coding unit 1322 having a size of NxN/2 by splitting the first coding unit 1320 in horizontal and vertical directions.

According to an embodiment, the image decoding apparatus 100 may determine a third coding unit 1304, 1314, or 1324 by splitting at least one of a width and height of the second coding unit 1302 having a size of NxN. That is, the image decoding apparatus 100 may determine the third coding unit 1304 having a size of N/2xN/2, the third coding unit 1314 having a size of N/4xN/2, or the third coding unit 1324 having a size of N/2xN/4 by splitting the second coding unit 1302 in vertical and horizontal directions.

According to an embodiment, the image decoding apparatus 100 may determine the third coding unit 1304, 1314, or 1324 by splitting at least one of a width and height of the second coding unit 1312 having a size of N/2xN. That is, the image decoding apparatus 100 may determine the third coding unit 1304 having a size of N/2xN/2 or the third coding unit 1324 having a size of N/2xN/4 by splitting the second coding unit 1312 in a horizontal direction, or may determine the third coding unit 1314 having a size of N/4xN/2 by splitting the second coding unit 1312 in vertical and horizontal directions.

According to an embodiment, the image decoding apparatus 100 may determine the third coding unit 1304, 1314, or 1324 by splitting at least one of a width and height of the second coding unit 1322 having a size of NxN/2. That is, the image decoding apparatus 100 may determine the third coding unit 1304 having a size of N/2xN/2 or the third coding unit 1314 having a size of N/4xN/2 by splitting the second coding unit 1322 in a vertical direction, or may determine the third coding unit 1324 having a size of N/2xN/4 by splitting the second coding unit 1322 in vertical and horizontal directions.

According to an embodiment, the image decoding apparatus 100 may split the square coding unit 1300, 1302, or 1304 in a horizontal or vertical direction. For example, the image decoding apparatus 100 may determine the first coding unit 1310 having a size of Nx2N by splitting the first coding unit 1300 having a size of 2Nx2N in a vertical direction, or may determine the first coding unit 1320 having a size of 2NxN by splitting the first coding unit 1300 in a horizontal direction. According to an embodiment, when a depth is determined based on the length of the longest side of a coding unit, a depth of a coding unit determined by splitting the first coding unit 1300 having a size of 2Nx2N in a horizontal or vertical direction may be the same as the depth of the first coding unit 1300.

According to an embodiment, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

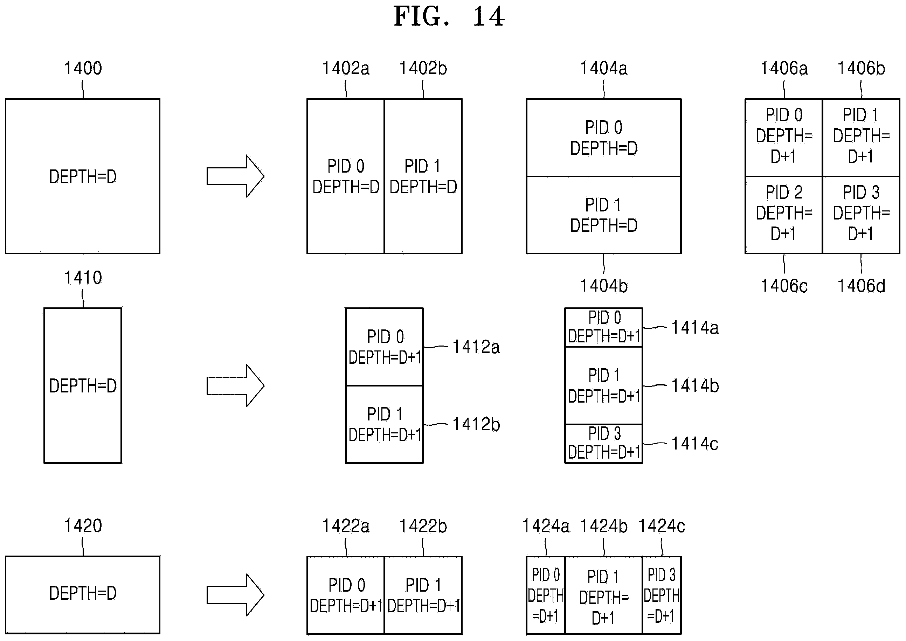

FIG. 14 illustrates depths that are determinable based on shapes and sizes of coding units, and part indexes (PIDs) that are for distinguishing the coding units, according to an embodiment.

According to an embodiment, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of vertical and horizontal directions based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment, a depth of the second coding units 1402a and 1402b, 1404a and 1404b, and 1406a, 1406b, 1406c, and 1406d, which are determined based on the split shape mode information of the square first coding unit 1400, may be determined based on the length of a long side thereof. For example, because the length of a side of the square first coding unit 1400 equals the length of a long side of the non-square second coding units 1402a and 1402b, and 1404a and 1404b, the first coding unit 2100 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is lower than the depth D of the first coding unit 1400 by 1.

According to an embodiment, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment, a depth of the second coding units 1412a and 1412b, and 1414a, 1414b, and 1414c, or 1422a and 1422b, and 1424a, 1424b, and 1424c, which are determined based on the split shape mode information of the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is lower than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is lower than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment, the image decoding apparatus 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and thus may be 3. That is, discontinuity in PID values may be present. According to an embodiment, the image decoding apparatus 100 may determine whether an odd number of split coding units do not have equal sizes, based on whether discontinuity is present in PIDs for identifying the split coding units.

According to an embodiment, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify respective coding units. According to an embodiment, the PID may be obtained from a sample of a certain location of each coding unit (e.g., an upper left sample).

According to an embodiment, the image decoding apparatus 100 may determine a coding unit at a certain location from among the split coding units, by using the PIDs for distinguishing the coding units. According to an embodiment, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit at a center location from among the coding units. The image decoding apparatus 100 may determine the coding unit 1414b having a PID corresponding to a middle value among the PIDs of the coding units, as the coding unit at the center location from among the coding units determined by splitting the first coding unit 1410. According to an embodiment, the image decoding apparatus 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and thus may be 3. When the PID is not uniformly increased as described above, the image decoding apparatus 100 may determine that a coding unit is split into a plurality of coding units including a coding unit having a size different from that of the other coding units. According to an embodiment, when the split shape mode information indicates to split a coding unit into an odd number of coding units, the image decoding apparatus 100 may split a current coding unit in such a manner that a coding unit of a certain location among an odd number of coding units (e.g., a coding unit of a center location) has a size different from that of the other coding units. In this case, the image decoding apparatus 100 may determine the coding unit of the center location, which has a different size, by using PIDs of the coding units. However, the PIDs and the size or location of the coding unit of the certain location are not limited to the above-described examples, and various PIDs and various locations and sizes of coding units may be used.

According to an embodiment, the image decoding apparatus 100 may use a certain data unit where a coding unit starts to be recursively split.

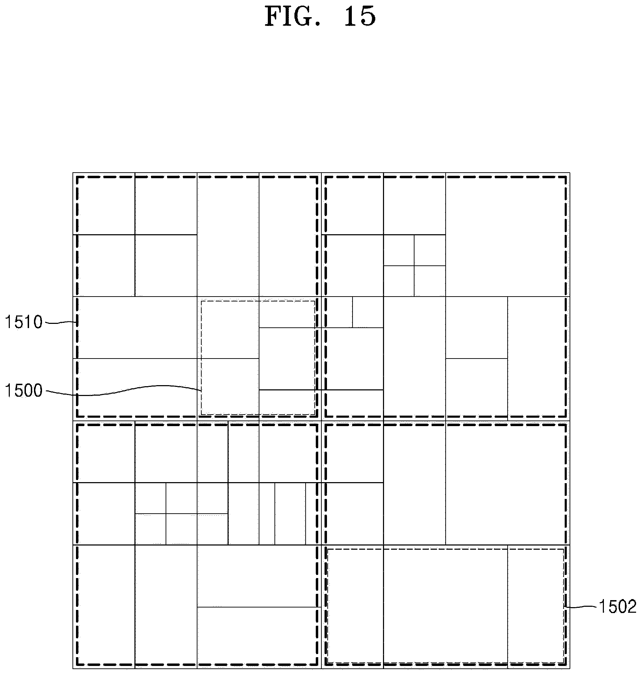

FIG. 15 illustrates that a plurality of coding units are determined based on a plurality of certain data units included in a picture, according to an embodiment.

According to an embodiment, a certain data unit may be defined as a data unit where a coding unit starts to be recursively split by using split shape mode information. That is, the certain data unit may correspond to a coding unit of an uppermost depth, which is used to determine a plurality of coding units split from a current picture. In the following descriptions, for convenience of explanation, the certain data unit is referred to as a reference data unit.

According to an embodiment, the reference data unit may have a certain size and a certain size shape. According to an embodiment, the reference data unit may include MxN samples. Herein, M and N may be equal to each other, and may be integers expressed as powers of 2. That is, the reference data unit may have a square or non-square shape, and may be split into an integer number of coding units.

According to an embodiment, the image decoding apparatus 100 may split the current picture into a plurality of reference data units. According to an embodiment, the image decoding apparatus 100 may split the plurality of reference data units, which are split from the current picture, by using the split shape mode information of each reference data unit. The operation of splitting the reference data unit may correspond to a splitting operation using a quadtree structure.

According to an embodiment, the image decoding apparatus 100 may previously determine the minimum size allowed for the reference data units included in the current picture. Accordingly, the image decoding apparatus 100 may determine various reference data units having sizes equal to or greater than the minimum size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment, the shape and size of reference coding units may be determined based on various data units capable of including one or more reference coding units (e.g., sequences, pictures, slices, slice segments, tiles, tile groups, CTUs, or the like).

According to an embodiment, the receiver 110 of the image decoding apparatus 100 may obtain, from a bitstream, at least one of reference coding unit shape information and reference coding unit size information with respect to each of the various data units. An operation of splitting the square reference coding unit 1500 into one or more coding units has been described above in relation to the operation of splitting the current coding unit 300 of FIG. 3, and an operation of splitting the non-square reference coding unit 1502 into one or more coding units has been described above in relation to the operation of splitting the current coding unit 400 or 450 of FIG. 4. Thus, detailed descriptions thereof will not be provided herein.

According to an embodiment, the image decoding apparatus 100 may use a PID for identifying the size and shape of reference coding units, to determine the size and shape of reference coding units according to some data units previously determined based on a certain condition. That is, the receiver 110 may obtain, from the bitstream, only the PID for identifying the size and shape of reference coding units with respect to each slice, slice segment, tile, tile group, or CTU which is a data unit satisfying a certain condition (e.g., a data unit having a size equal to or smaller than a slice) among the various data units (e.g., sequences, pictures, slices, slice segments, tiles, tile groups, CTUs, or the like). The image decoding apparatus 100 may determine the size and shape of reference data units with respect to each data unit, which satisfies the certain condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the image decoding apparatus 100 may determine at least one of the size and shape of reference coding units included in a data unit serving as a unit for obtaining the PID, by selecting the previously determined at least one of the size and shape of reference coding units based on the PID.

According to an embodiment, the image decoding apparatus 100 may use one or more reference coding units included in a CTU. That is, a CTU split from a picture may include one or more reference coding units, and coding units may be determined by recursively splitting each reference coding unit. According to an embodiment, at least one of a width and height of the CTU may be integer times at least one of the width and height of the reference coding units. According to an embodiment, the size of reference coding units may be obtained by splitting the CTU n times based on a quadtree structure. That is, the image decoding apparatus 100 may determine the reference coding units by splitting the CTU n times based on a quadtree structure, and may split the reference coding unit based on at least one of the block shape information and the split shape mode information according to various embodiments.

According to an embodiment, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each CTU, each reference coding unit, or each processing block, and may use the obtained syntax element.

Hereinafter, a method of determining a split rule, according to an embodiment of the present disclosure will be described in detail.

The image decoding apparatus 100 may determine a split rule of an image. The split rule may be pre-determined between the image decoding apparatus 100 and the image encoding apparatus 2200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, CTUs, or coding units.

The image decoding apparatus 100 may determine the split rule based on a block shape of a coding unit. The block shape may include a size, shape, a ratio of width and height, and a direction of the coding unit. The image decoding apparatus 100 may pre-determine to determine the split rule based on the block shape of the coding unit. However, an embodiment is not limited thereto. The image decoding apparatus 100 may determine the split rule of the image, based on information obtained from a received bitstream.

The shape of the coding unit may include a square and a non-square. When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square.

The size of the coding unit may include various sizes, such as 4x4, 8x4, 4x8, 8x8, 16x4, 16x8, and to 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. Also, the image decoding apparatus 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule pre-determined in the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule such that coding units generated via different splitting paths do not have the same block shape. However, an embodiment is not limited thereto, and the coding units generated via different splitting paths have the same block shape. The coding units generated via the different splitting paths may have different decoding process orders. Because the decoding process orders have been described above with reference to FIG. 12, details thereof are not provided again.

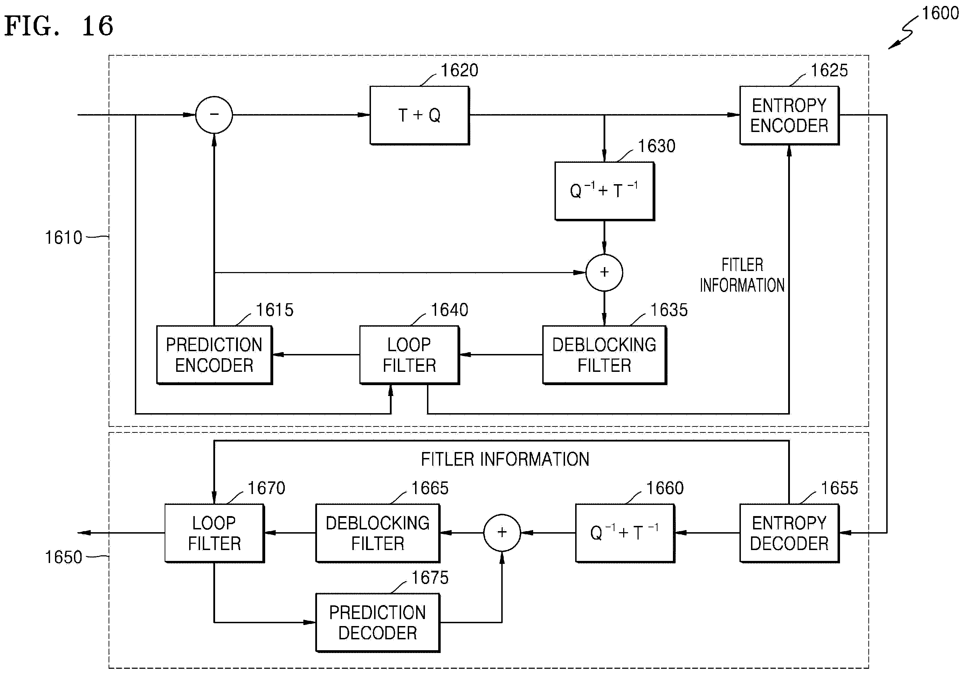

FIG. 16 is a block diagram of an image encoding and decoding system.

An encoding end 1610 of an image encoding and decoding system 1600 transmits an encoded bitstream of an image and a decoding end 1650 outputs a reconstructed image by receiving and decoding the bitstream. Here, the decoding end 1550 may have a similar configuration as the image decoding apparatus 100.

At the encoding end 1610, a prediction encoder 1615 outputs a reference image via inter-prediction and intra-prediction, and a transformer and quantizer 1620 quantizes residual data between the reference picture and a current input image to a quantized transform coefficient and outputs the quantized transform coefficient. An entropy encoder 1625 transforms the quantized transform coefficient by encoding the quantized transform coefficient, and outputs the transformed quantized transform coefficient as a bitstream. The quantized transform coefficient is reconstructed as data of a spatial domain via an inverse quantizer and inverse transformer 1630, and the data of the spatial domain is output as a reconstructed image via a deblocking filter 1635 and a loop filter 1640. The reconstructed image may be used as a reference image of a next input image via the prediction encoder 1615.

Encoded image data among the bitstream received by the decoding end 1650 is reconstructed as residual data of a spatial domain via an entropy decoder 1655 and an inverse quantizer and inverse transformer 1660. Image data of a spatial domain is configured when a reference image and residual data output from a prediction decoder 1675 are combined, and a deblocking filter 1665 and a loop filter 1670 may output a reconstructed image regarding a current original image by performing filtering on the image data of the spatial domain. The reconstructed image may be used by the prediction decoder 1675 as a reference image for a next original image.

The loop filter 1640 of the encoding end 1610 performs loop filtering by using filter information input according to a user input or system setting. The filter information used by the loop filter 1640 is output to the entropy encoder 1625 and transmitted to the decoding end 1650 together with the encoded image data. The loop filter 1670 of the decoding end 1650 may perform loop filtering based on the filter information input from the decoding end 1650.

Hereinafter, with reference to FIGS. 17 through 20, a method and apparatus for encoding or decoding a video by using blocks of various sizes and various shapes that are split from a picture will be described in detail, according to an embodiment described in this specification.

Hereinafter, a "maximum size of a coding unit" refers to a maximum size of a larger side of a width and a height of the coding unit, and a "minimum size of a coding unit" refers to a minimum size of a larger side of a width and a height of the coding unit.

Hereinafter, a "tree structure" may denote a hierarchical structure of one or more coding units formed according to whether a split mode of a coding unit is a quad split, a binary split, a ternary split, or a non-split. For example, a hierarchical structure of blocks generated from a current coding unit according to the splitting process of FIG. 5 is referred to as a tree structure.

FIG. 17 is a block diagram of a video decoding apparatus according to an embodiment.

Referring to FIG. 17, a video decoding apparatus 1700 according to an embodiment may include a luma block decoder 1710 and a chroma block decoder 1720.

The video decoding apparatus 1700 may obtain a bitstream generated as a result of coding an image, identify a location of blocks split from a picture based on information included in the bitstream, and decode the blocks, such as a coding tree unit (CTU) and a coding unit.

The video decoding apparatus 1700 according to an embodiment may include a central processor (not shown) configured to control the luma block decoder 1710 and the chroma block decoder 1720. Alternatively, the video decoding apparatus 1700 may generally operate with the luma block decoder 1710 and the chroma block decoder 1720 each operating via a separate processor (not shown) and the processors interatively operating. Alternatively, the luma block decoder 1710 and the chroma block decoder 1720 may be controlled according to control by an external processor (not shown) of the video decoding apparatus 1700.

The video decoding apparatus 1700 may include one or more data storages (not shown) in which input and output data of the luma block decoder 1710 and the chroma block decoder 1720 are stored. The video decoding apparatus 1700 may include a memory controller (not shown) controlling a data input and output of the data storages (not shown).

The video decoding apparatus 1700 may perform an image decoding operation including prediction by connectively operating with an internal video decoding processor or an external video decoding processor so as to reconstruct an image via image decoding. The internal video decoding processor of the video decoding apparatus 1700 according to an embodiment may perform a basic image decoding operation in a manner that not only a separate processor but also an image decoding processing module included in a central processing apparatus or a graphic processing apparatus perform the basic image decoding operation.

The video decoding apparatus 1700 may be included in the image decoding apparatus 100 described above. For example, the luma block decoder 1710 and the chroma block decoder 1720 may correspond to the decoder 120 of the image decoding apparatus 100.

The luma block decoder 1710 may receive a bitstream generated as a result of encoding an image. The bitstream may include information about a current picture. A picture may include one or more CTUs. The luma block decoder 1710 may determine a location of a current luma block in the picture based on the information obtained from the bitstream. The current luma block is a luma block split from the picture according to a tree structure, and for example, may correspond to a CTU or a CU. The luma block decoder 1710 may determine whether or not the current luma block is to be further split into a lower luma block of a lower depth and may determine a tree structure of the current luma block. The lower depth may be determined according to the number of times in which the current luma block is split into lower luma blocks, compared to a current depth of the current luma block. From among luma blocks included in the tree structure included in the current picture, luma blocks located at the tree's leaf node are the luma blocks that are not further split. Thus, the decoder 1710 may perform inverse-quantization, inverse-transformation, and prediction on one or more luma blocks that are not further split, to decode the luma blocks.

The chroma block decoder 1720 may determine a tree structure of a chroma block corresponding to the current luma block in the current picture and may decode chroma blocks generated according to the tree structure. Chroma blocks located at the tree's leaf node from among the chroma blocks generated according to the tree structure are the blocks that are not further split. Thus, the chroma block decoder 1720 may perform inverse-quantization, inverse-transformation, and prediction on the chroma blocks that are not further split, to generate chroma reconstruction samples.

The video decoding apparatus 1700 may combine luma reconstruction samples of the luma blocks decoded by the luma block decoder 1720 and the chroma reconstruction samples of the chroma blocks decoded by the chroma block decoder 1710, to reconstruct the current picture.

The luma block decoder 1710 according to an embodiment may obtain a width of the picture based on information about the width of the picture that is obtained from a bitstream. The luma block decoder 1710 according to an embodiment may obtain a height of the picture based on information about the height of the picture that is obtained from a bitstream. The information about the width of the picture indicates the number of luma samples arranged in a width direction of the picture, wherein the number of luma samples arranged in the width direction may be an integer multiple of 8. The information about the height of the picture indicates the number of luma samples arranged in a height direction of the picture, wherein the number of luma samples arranged in the height direction may be an integer multiple of 8.

Even when at least one of a width and a height of a smallest block allowed for a current block is less than 8, the luma block decoder 1710 according to an embodiment may obtain the width of the picture that is an integer multiple of 8 based on the information about the width of the picture and may obtain the height of the picture that is an integer multiple of 8 based on the information about the height of the picture.

When each of the information about the width of the picture and the information about the height of the picture obtained from the bitstream according to an embodiment corresponds to the integer multiple of 8, generation of a chroma coding unit having a size of 4x2, 2x4, or 2x2 may be prevented. As a relatively small-sized chroma coding unit is not generated, an improvement with respect to a throughput of a decoding operation of the video decoding apparatus 1700 may be expected.

Thus, a size of the current picture, which is determined based on the information about the width of the picture and the information about the height of the picture, the information being obtained from the current bitstream, may have to be an integer multiple of a greater number between a size of a smallest block and 8. When the size of the current picture is not the integer multiple of the greater number between the size of the smallest block and 8, the video decoding apparatus 1700 may determine the current bitstream as a bitstream that is defectively generated and may not perform a decoding operation.

The luma block decoder 1710 according to an embodiment may split the current block to generate blocks of lower depths, when an x coordinate according to a luma width of the current block generated from the picture is greater than the width of the picture or a y coordinate according to a luma height of the current block is greater than the height of the picture.

A tree type of a CU may be a single tree type or a dual tree type. When the tree type of the CU is a dual tree type, the dual tree type may be a luma dual tree type or a chroma dual tree type. When the tree type of the CU is a single tree type, the tree structure of the luma block corresponding to the CU is determined beforehand, and the chroma block corresponding to the luma block located at the tree's leaf node and decoded is also decoded. In the case of the dual tree type, the tree structure of the luma block corresponding to the CU and the tree structure of the chroma block may be separately determined from each other.

The current block may be split into the luma block and the chroma block. In the case of the single tree type, after the tree structure of the current block is determined, a luma block and a chroma block of the current block, which are not further split, may be determined and each of the luma block and the chroma block may be decoded. In the case of the dual tree type, the tree structure of the luma block of the current block may be determined, and the luma block that is not further split may be decoded. In addition, the tree structure of the chroma block corresponding to the luma block may be separately determined from the tree structure of the luma block, and the chroma block that is not further split may be decoded.

The luma block decoder 1710 according to an embodiment may decode the luma block of the current block, when an x coordinate according to a luma width of the current block generated from the picture is not greater than the width of the picture, a y coordinate according to a luma height of the current block is not greater than the height of the picture, and a split mode is a non-split mode.

The chroma block decoder 1720 according to an embodiment may determine the chroma block corresponding to the luma block and decode the chroma block. In detail, when a tree type of the current block is a single type, a size of the chroma block may be determined proportionally to a size of the luma block, based on a color format. For example, in the case of a color format of YUV 4:2:0, a chroma block having a half width of a width of a luma block and a half height of a height of the luma block may be determined. Thus, based on the size of the current luma block that is not further split into a CU of a lower depth and is decoded by the luma block decoder 1710, the chroma block decoder 1720 may determine the size of the current chroma block and decode the current chroma block.

When the tree type of the current block is a dual tree type, the chroma block decoder 1720 according to an embodiment may determine the tree structure of the chroma block separately from the tree structure of the luma block. The chroma block decoder 1720 according to an embodiment may decode one or more chroma blocks generated according to the tree structure of the current chroma block.

Also, when a tree type of a CU according to an embodiment is a dual tree type, a prediction mode may be constrained to an intra prediction mode.

Also, when a slice type of the current CU is an I-slice type, or when an available prediction mode of the current CU is a constrained intra prediction mode (constraint-pred-intra), the tree type of the current CU may be determined to be a dual tree type.

The luma block decoder 1710 according to an embodiment may obtain the information about the width of the picture and the information about the height of the picture from at least one of a sequence parameter set and a picture parameter set.

The luma block decoder 1710 according to an embodiment may determine block shape information and/or a split shape mode of the luma block based on a CU split flag obtained from a bitstream. Furthermore, the luma block decoder 1710 may determine the tree structure of the luma block based on the block shape information or the split shape mode for each CTU, each reference CU, and each processing block.

When the tree type of the current CU is a dual tree type, the chroma block decoder 1720 according to an embodiment may determine block shape information and/or a split shape mode of the chroma block based on a CU split flag obtained from a bitstream. Furthermore, the chroma block decoder 1720 may determine the current chroma block based on the block shape information or the split shape mode for each CTU, each reference CU, and each processing block. According to a split mode of the current chroma block, the chroma block decoder 1720 may split the current chroma block into chroma blocks of lower depths or may not further split the current chroma block and may decode the current chroma block.

The luma block decoder 1710 according to an embodiment may determine a size of a CTU by using information about the size of the CTU obtained from a bitstream.

The luma block decoder 1710 according to an embodiment may determine a minimum size of a luma CU by using information about the minimum size of the luma CU obtained from a bistream. In detail, the information about the minimum size of the luma CU is a binary log value, and the luma block decoder 1710 may use a value obtained by adding 2 to the information about the minimum size of the luma CU, to determine the minimum size of the luma CU. Thus, when the information about the minimum size of the luma CU indicates 0, 2 to the power 2 may be determined to be the minimum size of the luma CU.

For example, when a prediction mode of the current luma block is an intra mode, the luma block decoder 1710 may determine a reference sample from among samples of a spatial neighboring block located in a intra prediction direction by using intra prediction information of the luma block and may determine prediction samples corresponding to the current block by using the reference sample.

For example, when the prediction mode of the luma block is an inter mode, the luma block decoder 1710 may reconstruct the current block by using a motion vector of the luma block. The luma block decoder 1710 may determine a reference block in a reference picture by using the motion vector of the luma block and may determine prediction samples corresponding to the current luma block from reference samples included in the reference block. The luma block decoder 1710 may reconstruct transform coefficients by using a transform coefficient level obtained from a bitstream and may perform inverse-quantization and inverse-transformation on the transform coefficients to reconstruct residual samples. The luma block decoder 1710 may determine reconstruction samples of the luma block by combining the prediction samples corresponding to the luma block and the residual samples.

When the prediction mode of the luma block is a skip mode, the luma block decoder 1710 does not need to parse the transform coefficients of the luma block from a bitstream. The luma block decoder 1710 may intractly use the prediction samples of the luma block to determine the reconstruction samples of the luma block.

In the case of a single tree type, the chroma block decoder 1720 may determine the size of the chroma block corresponding to the luma block based on a color format of YUV. For example, in the case of the color format of YUV 4:2:0, a current chroma block having a size of 4x4 may be determined to correspond to a current luma block having a size of 8x8.

Like the luma block decoder 1710, the chroma block decoder 1720 may determine a reconstruction block of the chroma block by performing prediction, inverse-quantization, and inverse- transformation on the chroma block. Detailed prediction, inverse-quantization, and inverse-transformation operations are the same as described above with respect to the luma block decoder 1710.

The luma block decoder 1710 according to an embodiment may reconstruct the luma blocks included in the CTU, and thus, may reconstruct the picture including one or more CTUs.

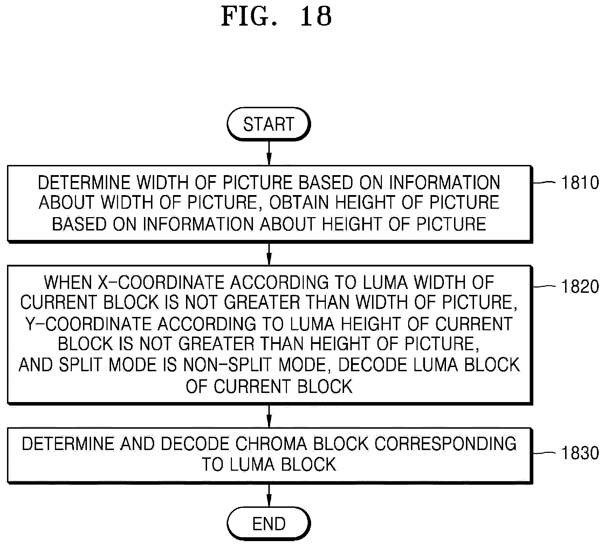

Hereinafter, a video decoding method performed by the video decoding apparatus 1700 according to an embodiment for preventing a small-sized intra block is described below with reference to FIG. 18.

FIG. 18 is a flowchart of a video decoding method according to an embodiment.

In operation 1810, the luma block decoder 1710 may determine a width of a picture based on information about the width of the picture that is obtained from a bitstream. The luma block decoder 1710 may determine a height of the picture based on information about the height of the picture that is obtained from a bitstream.

The information about the width of the picture according to an embodiment may indicate the number of luma samples arranged in a width direction of the picture, and the number of luma samples arranged in the width direction may be an integer multiple of 8. Similarly, the information about the height of the picture may indicate the number of luma samples arranged in a height direction of the picture, and the number of luma samples arranged in the height direction may be an integer multiple of 8.

The information about the width of the picture according to another embodiment may indicate a value that is an integer multiple of whichever the greater value between a minimum size of the luma block and 8. Similarly, the information about the height of the picture may indicate a value that is an integer multiple of whichever the greater value between a minimum size of the luma block and 8.

In operation 1820, the luma block decoder 1710 may decode the luma block of a current block, when an x coordinate according to a luma width of the current block generated from the picture is not greater than the width of the picture, a y coordinate according to a luma height of the current block is not greater than the height of the picture, and a split mode is a non-split mode.

In operation 1830, the chroma block decoder 1720 may determine a chroma block corresponding to the luma block and decode the chroma block.

When a tree type of the current block is a dual tree type and a prediction mode of the current block is an intra prediction mode, and when a width of the chroma block is 4, the chroma block decoder 1720 according to an embodiment may not allow a binary vertical split of the chroma block. The binary vertical split denotes binary splitting a block in a vertical direction by binary splitting a width of the block.

When the tree type of the current block is a dual tree type and the prediction mode of the current block is an intra prediction mode, and when the number of chroma samples corresponding to the luma block is less than or equal to 16, the chroma block decoder 1720 according to an embodiment may not allow a binary split of the chroma block.

When the tree type of the current block is a dual tree type and the prediction mode of the current block is an intra prediction mode, and when the number of chroma samples corresponding to the luma block is less than or equal to 32, the chroma block decoder 1720 according to an embodiment may not allow a ternary split of the chroma block.

For example, when a split mode of the luma block is a binary vertical split mode with a current luma block deviating from a boundary line of the picture in a height direction, a binary vertical split of the current luma block is allowed, and thus, the binary vertical split may be performed on the luma block. Thus, when an x coordinate according to a width of the luma block generated from the picture is greater than the width of the picture and the split mode is the binary vertical split mode, the luma block decoder 1710 according to an embodiment may generate first luma blocks of a lower depth by performing a binary vertical split on the luma block. As another example, when the split mode of the luma block is a binary horizontal split mode with the luma block deviating from a boundary line of the picture in a horizontal direction, a binary horizontal split of the luma block is not allowed, and thus, a binary split may not at all be performed on the luma block.

For example, when the luma block deviates from a boundary line of the picture in a vertical direction and the split mode of the luma block is a binary horizontal split mode, a binary horizontal split of the luma block is allowed, and thus, the binary horizontal split may be performed on the luma block. Thus, when an x coordinate according to a width of the luma block generated from the picture is not greater than the width of the picture, a y coordinate according to a height of the luma block is greater than the height of the picture, and the split mode is the binary horizontal split mode, the luma block decoder 1710 according to an embodiment may generate second luma blocks of a lower depth by performing a binary horizontal split on the luma block. As another example, when the split mode of the luma block is a binary vertical split mode with the luma block deviating from a boundary line of the picture in a vertical direction, a binary vertical split of the luma block is not allowed, and thus, a binary split may not at all be performed on the luma block.

The luma block decoder 1710 according to an embodiment may obtain the information about the width of the picture and the information about the height of the picture from a picture parameter set syntax structure.

The video decoding apparatus 1700 according to an embodiment may support the case where the numbers of samples in the width direction and the height direction of the picture are multiple numbers of 8, respectively. Thus, each of the information about the width of the picture and the information about the height of the picture, obtained by the luma block decoder 1710 from the bitstream, has to be an integer multiple of 8. When this condition is not met, and when a CTU exists at a location at which the number of samples is short of or exceeds 4 samples from a right boundary line and a lower boundary line of the picture, a luma CU having a size of 8x4, 4x8, or 4x4 may be generated from the CTU. Also, a chroma CU having a size of 4x2, 2x4, or 2x2, corresponding to the luma CU, may be generated. The chroma CU having the size of 4x2, 2x4, or 2x2 is not allowed in an intra prediction mode. Thus, when each of the number of samples in the width direction of the picture and the number of samples in the height direction of the picture is not a multiple number of 8, the video decoding apparatus 1700 according to an embodiment may not properly perform a decoding operation.

Accordingly, when each of the information about the width of the picture and the information about the height of the picture obtained from the bitstream according to an embodiment is an integer multiple of 8, the generation of the chroma CU having the size of 4x2, 2x4, or 2x2 may be prevented. Because the chroma CU having a relatively small size is not generated, an improvement of a throughput of the decoding operation of the video decoding apparatus 1700 may be derived.

The information about the width of the picture according to another embodiment may indicate a value that corresponds to an integer multiple of a greater number between a minimum size of the current luma block and 8. Similarly, the information about the height of the picture may indicate a value that corresponds to an integer multiple of a greater number between the minimum size of the current luma block and 8. Even when the minimum size of the current luma block is less than 8, each of the width and the height of the picture is a multiple number of 8, and thus, the generation of the chroma CU having the size of 4x2, 2x4, or 2x2 may be prevented.

As described above according to the embodiments above, the video decoding apparatus 1700 according to an embodiment may decode a picture, a width and a height of which are respectively integer multiples of 8 or are respectively integer multiples of a greater number between a minimum size of the luma block and 8. Accordingly, even when a minimum size of a block width or a block height supported by the video decoding apparatus 1700 is less than 8, the width and the height of the picture are respectively integer multiples of 8, and thus, the generation of the chroma CU having the size of 4x2, 2x4, or 2x2 may be prevented.

The obtainer 1710 according to an embodiment may obtain information about a minimum size of the luma CU from a bitstream. The luma block decoder 1710 according to an embodiment may determine the minimum size of the luma CU by performing inverse binary log transformation on a value generated by adding 2 to the information about the minimum size of the luma CU. Here, 2 denotes a minimum binary log value which a maximum size of the luma CU may have, and thus, the minimum size of the luma CU may be 4.

The luma block decoder 1710 may obtain, from a bitstream, information indicating a difference between a size of a CTU and a maximum size of a block for which a ternary split is possible. The luma block decoder 1710 according to an embodiment may determine the maximum size of the block for which the ternary split is possible, by using the difference between the maximum size of the block for which the ternary split is allowed and the size of the CTU.

In detail, the luma block decoder 1710 according to an embodiment may determine the maximum size of the block for which the ternary split is possible, such that the maximum size of the block for which the ternary split is possible is equal to a smaller value between a block size according to a value obtained by subtracting the difference from the size of the CTU, and a maximum size of a transform unit. Thus, the maximum size of the block for which the ternary split is possible may be determined not to be greater than the maximum size of the transform unit. For example, a binary log value of the maximum size of the transform unit may be 6.

The luma block decoder 1710 according to an embodiment may obtain, from a bitstream, information indicating a difference between the minimum size of the luma CU and a minimum size of the block for which a ternary split is possible. The luma block decoder 1710 according to an embodiment may determine the minimum size of the block for which the ternary split is possible by using the difference between the minimum size of the luma CU and the minimum size of the block for which the ternary split is allowed. In detail, the luma block decoder 1710 according to an embodiment may determine the minimum size of the block for which the ternary split is possible, by using a value obtained by summing the minimum size of the luma CU with the difference between the minimum size of the luma CU and the minimum size of the block for which the ternary split is allowed.

The luma block decoder 1710 according to an embodiment may determine whether or not to ternary split the current block, based on the maximum size of the block for which the ternary split is possible and the minimum size of the block for which the ternary split is possible. The luma block decoder 1710 according to an embodiment may decode blocks ternary split from the current block.

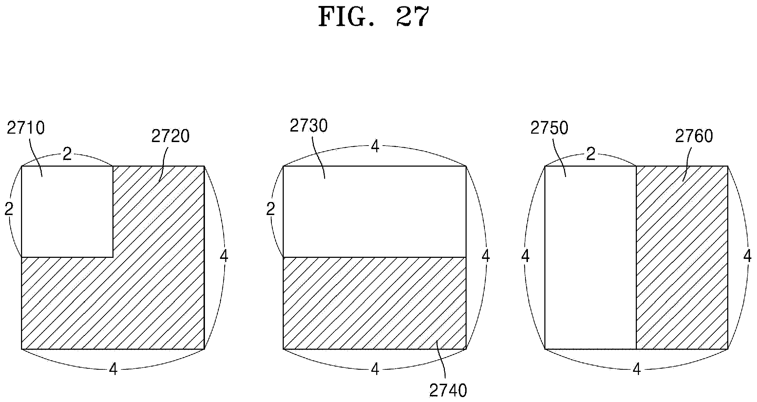

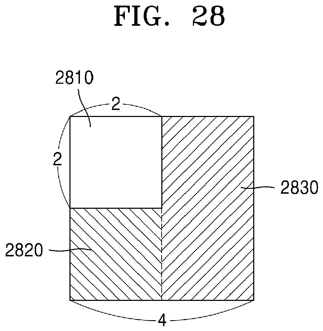

The picture reconstructed by the luma block decoder 1710 and the chroma block decoder 1720 may include a sample-padded picture region. In this case, the luma block decoder 1710 and the chroma block decoder 1720 may finally reconstruct the picture by cropping the padded region. An embodiment of the sample padding of the picture will be described in detail below with reference to FIGS. 27 and 28.

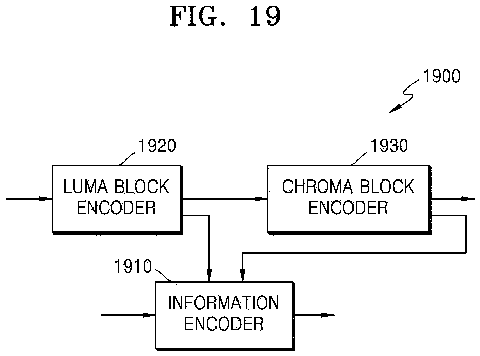

Hereinafter, a video encoding apparatus for transmitting the information about the width of the picture and the information about the height of the picture is described below with reference to FIG. 19.

FIG. 19 is a block diagram of a video encoding apparatus according to an embodiment.

Referring to FIG. 19, a video encoding apparatus 1900 according to an embodiment may include an information generator 1910, a luma block encoder 1920, and a chroma block encoder 1930.

The video encoding apparatus 1900 according to an embodiment may include a central processor (not shown) configured to control the information encoder 1910, the luma block encoder 1920, and the chroma block encoder 1930. Alternatively, the video encoding apparatus 1900 may generally operate with the information encoder 1910, the luma block encoder 1920, and the chroma block encoder 1930 each operating via their own respective processors (not shown) and the processors (not shown) interactively operating. Alternatively, the information encoder 1910, the luma block encoder 1920, and the chroma block encoder 1930 may be controlled according to control by an external processor (not shown) of the video encoding apparatus 1900.

The video encoding apparatus 1900 may include one or more data storages (not shown) in which input and output data of the information encoder 1910, the luma block encoder 1920, and the chroma block encoder 1930 are stored. The video encoding apparatus 1900 may include a memory controller (not shown) controlling a data input and output of the data storages (not shown).

The video encoding apparatus 1900 may perform an image encoding operation including prediction by connectively operating with an internal video encoding processor or an external video encoding processor so as to encode an image. The internal video encoding processor of the video encoding apparatus 1900 according to an embodiment may perform a basic image encoding operation in a manner that not only a separate processor but also an image encoding processing module included in a central processing apparatus or a graphic processing apparatus perform the basic image encoding operation.

The information encoder 1910 according to an embodiment may output syntax elements corresponding to the information about the height of the picture and the information about the width of the picture, in the form of a bitstream.

The luma block encoder 1920 according to an embodiment may split the picture into one or more luma CUs and may encode the CUs.

The luma block encoder 1920 according to an embodiment may split the picture into a plurality of CTUs and may split each CTU into luma blocks having various sizes and various shapes and may encode the luma blocks.

A current block may be split into a luma block and a chroma block. In the case of a single tree type, after a tree structure of the current block is determined, a luma block and a chroma block of the current block, which are not further split, may be determined, and each of the luma block and the chroma block may be encoded. In the case of a dual tree type, a tree structure of the luma block of the current block may be determined, and the luma block not to be further split may be encoded. Also, a tree structure of the chroma block corresponding to the luma block may be separately determined from the tree structure of the luma block, and the chroma block not further to be split may be encoded.

For example, when a prediction mode of the current block is an intra mode, the luma block encoder 1920 may determine a reference sample form among samples of a spatial neighboring block located in an intra prediction direction of the luma block of the current block and may determine prediction samples corresponding to the luma block by using the reference sample.

For example, when the prediction mode of the current block is a skip mode, the luma block encoder 1920 may determine a motion vector for predicting the luma block. The luma block encoder 1920 may determine a reference block of the luma block within a reference picture and may determine a motion vector indicating the reference block from the luma block. In the case of a skip mode, encoding of a residual block is not required.

For example, when the prediction mode of the current block is an inter mode, the luma block encoder 1920 may determine a motion vector for predicting the luma block. The luma block encoder 1920 may determine a reference block of the luma block within a reference picture and may determine a motion vector indicating the reference block from the luma block. The luma block encoder 1920 may determine a residual sample between luma blocks from reference samples included in the reference block and may perform transformation and quantization on the residual sample based on a transform unit to generate a quantized transform coefficient.

The luma block is generated by being split from an image according to a tree structure and may correspond to, for example, a CTU, a CU, or a transform unit. The luma block encoder 1920 may encode blocks included in the picture according to an encoding order.

The information encoder 1910 may output a bitstream including syntax elements corresponding to various encoding information determined as a result of encoding the luma blocks.

For example, the information encoder 1910 may include a CU split flag according to block shape information and/or a split shape mode, for each luma block according to the tree structure.

The luma block encoder 1920 according to an embodiment may determine a size of the CTU and a minimum size of the CU.

Like the luma block encoder 1920, the chroma block encoder 1930 may perform prediction, transformation, and quantization on the chroma block to determine the syntax elements corresponding to encoding information of the chroma block. Detailed prediction, inverse-quantization, and inverse-transformation operations are the same as described above with respect to the luma block decoder 1710.

The information encoder 1910 may output a bitstream including syntax elements corresponding to various encoding information determined as a result of encoding the chroma blocks.

The information encoder 1910 according to an embodiment may encode information about a size of a CTU based on the size of the CTU. The information encoder 1910 according to an embodiment may encode information about a minimum size of a CU based on the minimum size of the CU.

The information encoder 1910 according to an embodiment may generate the information about the width of the picture indicating the number of luma samples arranged in a width direction of the picture. The information encoder 1910 according to an embodiment may generate the information about the height of the picture indicating the number of luma samples arranged in a height direction of the picture. The information may be generated such that the number of luma samples arranged in the width direction of the picture indicates an integer multiple of 8 and the number of luma samples arranged in the height direction of the picture indicates an integer multiple of 8.

The luma block encoder 1920 according to an embodiment may encode a luma block of a current block when an x coordinate according to a luma width of the current block generated from the picture is not greater than the width of the picture, a y coordinate according to a luma height of the current block is not greater than the height of the picture, and a split mode is a non-split mode.

The chroma block encoder 1920 according to an embodiment may determine and encode a chroma block corresponding to the luma block. In detail, when a tree type of the current block is a single type, a size of the chroma block may be determined proportionally to a size of the luma block according to a color format. For example, in the case of a color format of YUV 4:2:0, a chroma block having a half width of a width of the luma block and a half height of a height of the luma block may be determined. Thus, based on a size of a current luma block that is not further split into a CU of a lower depth and is encoded by the luma block encoder 1920, the chroma block encoder 1930 may determine a size of a current chroma block and encode the current chroma block.

When a tree type of the current block is a dual tree type, the chroma block encoder 1930 according to an embodiment may separately determine a tree structure of the current chroma block from a tree structure of the luma block.

Also, when a prediction mode of a CU according to an embodiment is an intra prediction mode, the prediction mode may be constrained to an intra prediction mode, when the tree type of the CU is a dual tree type.

Also, when a slice type of the current CU is an I-slice type or an available prediction mode of the current CU is a constrained intra prediction mode (constraint-pred-intra), the tree type of the current CU may be determined as a dual tree type.

The chroma block encoder 1930 according to an embodiment may encode the chroma block according to the tree structure.

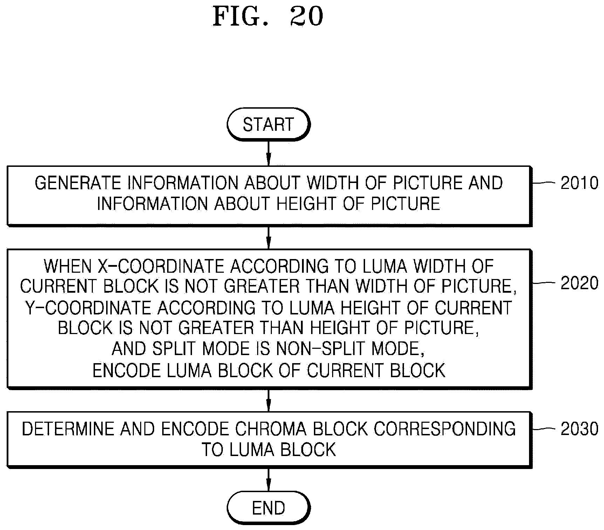

Hereinafter, a process performed by the video encoding apparatus 1900 to encode a video is described below with reference to FIG. 20.

FIG. 20 is a flowchart of a video encoding method according to an embodiment.

In operation 2010, the information encoder 1910 according to an embodiment may generate the information about the width of the picture indicating the number of luma samples arranged in the width direction of the picture and the information about the height of the picture indicating the number of luma samples arranged in the height direction of the picture. The number of luma samples arranged in the width direction of the picture may be determined to indicate an integer multiple of 8, and the number of luma samples arranged in the height direction of the picture may be determined to indicate an integer multiple of 8.

The information encoder 1910 according to an embodiment may generate the information about the width of the picture to indicate an integer multiple of whichever the greater value between a minimum size of the luma block and 8 and may generate the information about the height of the picture to indicate an integer multiple of whichever the greater value between the minimum size of the luma block and 8.

The information encoder 1910 according to an embodiment may include the information about the width of the picture and the information about the height of the picture in a picture parameter set syntax structure.

In operation 2020, the luma block encoder 1920 according to an embodiment may encode the luma block of the current block, when an x coordinate according to a luma width of the current block generated from the picture is not greater than the width of the picture, a y coordinate according to a luma height of the current block is not greater than the height of the picture, and a split mode is a non-split mode.

The luma block encoder 1920 according to an embodiment may perform sample padding outside a boundary line of the picture such that the width of the picture becomes a multiple number of 8. Also, the luma block encoder 1920 may perform sample padding outside the boundary line of the picture such that the height of the picture becomes a multiple number of 8. The luma block encoder 1920 may perform encoding on the luma block including the sample-padded region of the picture. An embodiment with respect to the sample padding of the picture will be described in detail below with reference to FIGS. 27 and 28.

In operation 2030, the chroma block encoder 1930 according to an embodiment may determine the chroma block corresponding to the luma block and encode the chroma block.

The chroma block encoder 1930 according to an embodiment may perform encoding on the chroma block including a sample-padded region of the picture.

When a prediction mode of the current block is an intra prediction mode and a tree type of the current block is a dual tree type, a tree structure of the chroma block may be separately determined from a tree structure of the luma block.

When the tree type of the current block is a dual tree type, and the prediction mode of the current block is an intra prediction mode, and when a width of the chroma block is 4, the chroma block encoder 1930 may not allow a binary vertical split of the chroma block.

When the tree type of the current block is a dual tree type, and the prediction mode of the current block is an intra prediction mode, and when the number of chroma samples corresponding to the luma block is less than or equal to 16, the chroma block encoder 1930 may not allow a binary split of the chroma block.

When the tree type of the current block is a dual tree type, and the prediction mode of the current block is an intra prediction mode, and when the number of chroma blocks corresponding to the luma block is less than or equal to 32, the chroma block encoder 1930 may not allow a ternary split of the chroma block.

The video encoding apparatus 1900 according to an embodiment may support the case where the numbers of samples in the width direction and the height direction of the picture are multiple numbers of 8, respectively. Thus, the video encoding apparatus 1900 has to encode each of the information about the width of the picture and the information about the height of the picture to indicate an integer multiple of 8. When this condition is not met, and when a CTU exists at a location at which the number of samples is short of or exceeds 4 samples from a right boundary line and a lower boundary line of the picture, a luma CU having a size of 8x4, 4x8, or 4x4 may be generated from the CTU. Also, a chroma CU having a size of 4x2, 2x4, or 2x2, corresponding to the luma CU, may be generated. The chroma CU having the size of 4x2, 2x4, or 2x2 is not allowed in an intra prediction mode. Thus, when each of the number of samples in the width direction of the picture and the number of samples in the height direction of the picture is not a multiple number of 8, the video encoding apparatus 1900 according to an embodiment may not properly perform an encoding operation.

Accordingly, when the video encoding apparatus 1900 generates each of the information about the width of the picture and the information about the height of the picture to indicate an integer multiple of 8, the generation of the chroma CU having the size of 4x2, 2x4, or 2x2 may be prevented. Also, because the chroma CU having a relatively small size is not generated, an improvement of a throughput of the encoding operation of the video encoding apparatus 1900 and a throughput of the decoding operation of the video decoding apparatus 1700 may be expected.

The information about the width of the picture according to another embodiment may indicate a value that corresponds to an integer multiple of whichever the greater value between a minimum size of the luma block and 8. Similarly, the information about the height of the picture may indicate a value that corresponds to an integer multiple of whichever the greater value between the minimum size of the luma block and 8. Even when the minimum size of the current luma block is less than 8, each of the width and the height of the picture is a multiple number of 8, and thus, the generation of the chroma CU having the size of 4x2, 2x4, or 2x2 may be prevented.

As described above according to the embodiments above, the video encoding apparatus 1900 according to an embodiment may determine the width and the height of the picture to be an integer multiple of 8 or an integer multiple of whichever the greater value between the minimum size of the luma block and 8. Accordingly, even when a minimum size of a block width or a block height supported by the video encoding apparatus 1900 is less than 8, the width and the height of the picture are respectively integer multiples of 8, and thus, the generation of the chroma CU having the size of 4x2, 2x4, or 2x2 may be prevented.

Thus, the information about the width of the picture and the information about the height of the picture, generated by the video encoding apparatus 1900 and included in the bitstream, may have to respectively indicate that the width and the height of the current picture are integer multiples of whichever the greater value between the minimum size of the block and 8. When the information included in the bitstream does not indicate that a size of the current picture is an integer multiple of a greater number between the minimum size of the block and 8, the video encoding apparatus 1900 may determine that a current bitstream is defectively generated and may not perform an encoding apparatus.

The luma block encoder 1920 according to an embodiment may determine a size of a CTU and a minimum size of a luma CU. The information encoder 1910 according to an embodiment may encode information about the size of the CTU based on the size of the CTU. The information encoder 1910 according to an embodiment may encode the information about the minimum size of the luma CU such that the information about the minimum size of the luma CU indicates a value obtained by subtracting 2 from a value to which a binary log of the minimum size of the luma CU is applied.

For example, the information encoder 1910 may include the information about the size of the CTU and the information about the minimum size of the CU in a sequence parameter set.

The luma block encoder 1920 according to an embodiment may constrain the minimum size of the luma CU to be equal to or less than 4.

The luma block encoder 1920 according to another embodiment may determine whether or not to ternary split a current block, based on a maximum size of a block for which a ternary split is possible and a minimum size of a block for which a ternary split is possible. For example, the maximum size of the block for which the ternary split is possible may be determined to be less than or equal to a maximum size of a transform unit. When the size of the current block is less than or equal to the maximum size of the block for which the ternary split is possible and is greater than or equal to the minimum size of the block for which the ternary split is possible, the luma block encoder 1920 according to another embodiment may perform prediction on blocks ternary split from the current block to encode the ternary split blocks.

The information encoder 1910 according to another embodiment may encode information indicating a difference between the size of the CTU and a maximum size of a CU for which a ternary split is possible. The information indicating the difference may be a value generated by applying a binary log to a difference value between the size of the CTU and the maximum size of the CU for which the ternary split is possible.

The information encoder 1910 according to another embodiment may encode information indicating a difference between a minimum size of a luma CU and a minimum size of a CU for which a ternary split is possible. The information indicating the difference may be a value generated by applying a binary log to a difference value between the minimum size of the luma CU and the minimum size of the CU for which the ternary split is possible. In detail, the information indicating the difference may be a value obtained by subtracting 2 from a binary log value of the difference value between the minimum size of the luma CU and the minimum size of the CU for which the ternary split is possible.

Information about a maximum size of a block and parameters about a minimum size of the block based on each block ratio according to various embodiments may respectively indicate values obtained by performing binary log transformation on a maximum size and a minimum size. The information about the maximum size of the block, the information about the minimum size of the block, etc., transmitted according to various embodiments, may be encoded and decoded via a unsigned exponential golomb code or a unary binarization code, etc.

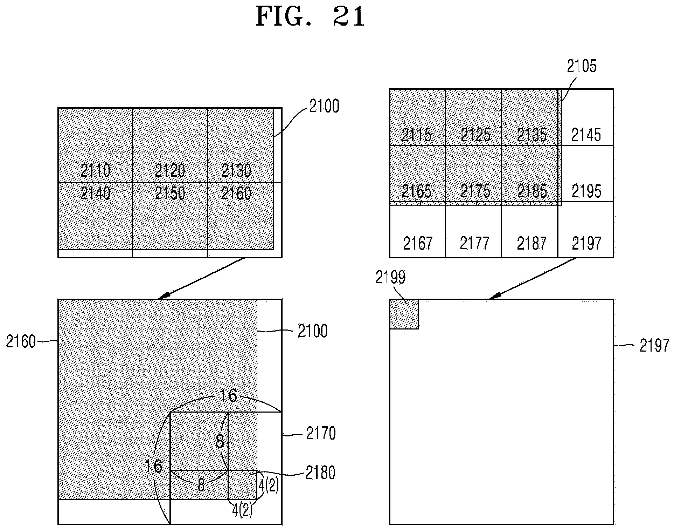

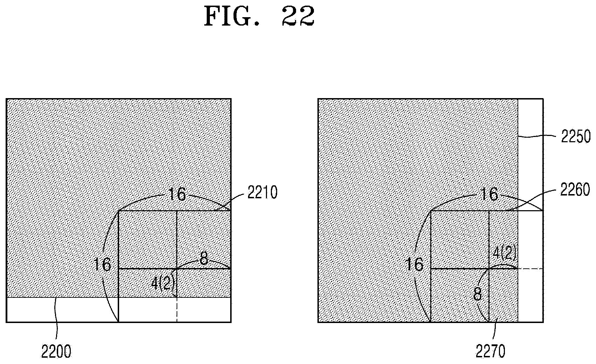

Hereinafter, sizes of a luma block and a chroma block which may occur when a width and a height of a picture are not multiple numbers of 8 are described with reference to FIGS. 21 and 22.

As a size of a block available in the video code standards, on which latest standardization is being performed, is decreased, the number of operations to be performed in units of a block has increased to process encoding and decoding operations of a picture. In particular, because a block having a size of 2x2 occurs with respect to a chroma block, issues of a throughput of encoding and decoding have raised. To solve these issues, in order not to generate a chroma block having a size of 2x2, 2x4, or 4x2, following conditions are generated.

Condition 1: when the number of samples included in a chroma block is equal to or less than 16, a quad split, a binary split, and a ternary split are constrained.

Condition 2: when the number of samples included in a chroma block is equal to or less than 32, a ternary split is constrained.

However, when a size of a picture is a multiple number of 4 and not a multiple number of 8 even when conditions 1 and 2 are used, the chroma block having the size of 2x2, 2x4, or 4x2 may be generated, when the width and the height of the picture are not multiple numbers of 8, as described hereinafter with reference to FIGS. 21 and 22.

FIG. 21 illustrates cases in which CTUs deviate from a boundary line of the picture when the width and the height of the picture are not multiple numbers of 8.

When a width and a height of a picture 2100 are not multiple numbers of 8, CTUs 2130 and 2160 from among CTUs 2100, 2120, 2130, 2140, 2150, and 2160 splitting the picture 2100 may be generated through a location at which the CTUs 2130 and 2160 deviate to the outside from a boundary line of the picture 2100 by 4 samples. Thus, the CTUs 2130 and 2160 may include an outer region of the picture 2100. In particular, the CTU 2160 is split, and thus, a luma block 2170 having a size of 16x16 is generated on a lower right side of the CTU 2160, and when a coding unit 2170 is quad split, a luma block 2180 having a size of 4x4 may be generated. When a YUV color format is 4:2:0, a size of a chroma block corresponding to the luma block 2180 having the size of 4x4 may be 2x2.

As a similar example, when a width and a height of a picture 2105 are not multiple numbers of 8, CTUs 2145, 2195, 2167, 2177, 2187, and 2197 from among CTUs 2115, 2125, 2135, 2145, 2155, 2165, 2175, 2185, 2195, 2167, 2177, 2187, and 2197 splitting the picture 2105 may be generated to include only a region corresponding to 4 samples located toward the picture 2015 from a boundary line of the picture 2015. Thus, the CTUs 2145, 2195, 2167, 2177, 2187, and 2197 may include an external region of the picture 2105. In particular, the CTU 2197 may be split into a luma block 2199 having a size of 4x4 on an upper left side of the CTU 2197. When a YUV color format is 4:2:0, a size of a chorma block corresponding to the luma block 2199 having the size of 4x4 may be 2x2.

FIG. 22 illustrates a case in which a CTU spanning a boundary line of a picture is quad split into a size of 8x8 when a width or a height of a picture is not a multiple number of 8.

When a height of a picture 2200 is not a multiple number of 8, a CTU may be generated through a region deviating to the outside by 4 samples from a lower boundary line of the picture 2200. When the CTU is continually split, a luma block 2210 having a size of 16x16 (or 16x14) may be generated and a luma block 2220 having a size of 8x4 may be generated from the luma block 2210. When a YUV color format is 4:2:0, a size of a chroma block corresponding to the luma block 2220 having the size of 8x4 may be 4x2.

As a similar example, when a width of a picture 2250 is not a multiple number of 8, a CTU may be generated through a region deviating to the outside of a right boundary line of the picture 2250 by 4 samples. When the CTU is continually split, a luma block 2260 having a size of 16x16 (or 14x16) may be generated, and a luma block 2270 having a size of 4x8 may be generated from the luma block 2260. When a YUV color format is 4:2:0, a size of a chroma block corresponding to the luma block 2270 having the size of 4x8 may be 2x4.

Thus, when the width of the picture is not a multiple number of 8 as illustrated in FIGS. 21 and 22, the size of the chroma block adjacent to the boundary line of the picture may be 2x2, 2x4, or 4x2.

In the previous H.264 or high efficiency video coding (HEVC)/H.265 codec, a size of a picture available in an encoder and a decoder is defined to be a multiple number of a size of a smallest block allowed in the codec.

A video encoder or a video decoder according to the versatile video coding (VVC) codec or the essential video coding (EVC) codec, on which recent standardizations are being performed, supports various block split methods (a quad split, a binary split, a ternary split, etc.). Thus, a block having a small size of 4x4, 4x8, or 8x4 is used. Also, in order to support small-sized blocks, additional processing operations are added to the video encoder or the video decoder. Also, as small blocks, such as chroma block having sizes of 2x2, 2x4, and 4x2, occur in a color format of YUV 4:2:0, deterioration in a throughput of a video encoder or a video decoder has been caused, and thus, techniques for solving the deterioration have been provided. In particular, as illustrated in FIGS. 21 and 22, because small blocks, such as chroma blocks having sizes of 2x2, 2x4, and 4x2, are also made around the boundary line of the picture, a method of solving this problem is provided.

To solve this problem, the video decoding apparatus 1700 and the video encoding apparatus 1900 according to an embodiment may constrain a width and a height of a picture to a predetermined size. For example, the video encoding apparatus 1900 may determine each of the width and height of the picture to be a multiple number of 8.

The video encoding apparatus 1900 according to an embodiment may determine each of information about the width of the picture and information about the height of the picture as an integer multiple of 8, for an appropriate decoding operation of the picture. Also, when at least one of the width and the height of the picture is not a multiple number of 8, the video encoding apparatus 1900 may encode the picture by performing sample padding such that the at least one of the width and the height of the picture becomes a multiple number of 8. The video decoding apparatus 1700 according to an embodiment may determine each of the width and the height of the picture, which are integer multiples of 8, by using the information about the width of the picture and the information about the height of the picture. Because each of the width and the height of the picture is an integer multiple of 8, small blocks, such as chroma blocks having sizes of 2x2, 2x4, and 4x2, may not be determined when blocks are determined by the video decoding apparatus 1700 according to an embodiment.

As another example, in order to indicate a reference unit of a width and a height of a picture, a syntax element of picture_size_unit may be defined. A size of a picture to be processed may be determined as an integer multiple of the syntax element of picture_size_unit. For example, a width of the picture may be indicated as picture_size_unit * M (M is a positive number), and a height of the picture may be indicated as picture_size_unit * N (N is a positive number). The syntax element may be replaced by log2_picture_size_unit, which is a binary log value of a reference unit. As another example, because the reference unit is always greater than 0, a syntax element of picture_size_unit_minus1, which is to indicate a value obtained by subtracting 1 from the reference unit, may be used.

As another example, it may be assumed that the reference unit always has to be greater than at least 2^K. For example, in the case of K=2, log2_picture_size_unit has to be greater than 2 and has to have a value equal to or greater than 3. Thus, a syntax element of log2_picture_size_unit_minus3 may also be used.

For example, the syntax element of picture_size_unit may be determined as 1 << (log2_picture_size_unit_minus3 + 3). When the value of the syntax element of log2_picture_size_unit_minus3 is received as 0, the syntax element of picture_size_unit may have a value of 8, and a width and a height of a corresponding picture may be determined to have a value of a multiple number of 8.

For example, semantics may be defined such that the indication of the syntax element of the width and the height of the picture is set based on the syntax element of picture_size_unit. For example, when the syntax element of picture_size_unit is 8, and a size of the picture is 1920x1080, the video encoding apparatus 1900 and the video decoding apparatus 1700 may signal a value corresponding to 1920/picture_size_unit as the width of the picture and may signal a value corresponding to 1080/picture_size_unit as the height of the picture.

As another example, in the case of a small block having a size of 4xN, Nx4, or 4x4, the width and the height of the picture may be determined by using a predetermined K value. In detail, when K is set as 8, each of the width and the height of the picture may be determined to be an inter multiple of K. Here, the value of K may be set to be at least greater than an allowable minimum length S of one side (K>S).

As another example, when the video encoding apparatus 1900 transmits a syntax element with respect to a minimum block size, the video decoding apparatus 1700 may set the width and the height of the picture as multiple numbers of the minimum block size.

As another example, the minimum block size may be assumed as 4, and the width and the height of the picture may be set as integer multiples of K based on the predefined value K.

According to an exceptional embodiment, because the frequency of chroma blocks having sizes of 2x2, 2x4, and 4x2 at a boundary line of the picture is low, the chroma blocks having the sizes of 2x2, 2x4, and 4x2 generated at the boundary line of the picture may be determined to be allowed. To this end, a split method with respect to blocks inside the picture and a split method with respect to blocks adjacent to the boundary line of the picture may have to be separately determined from each other. Block partitioning of the luma block may be separately performed from block partitioning of the chroma block. During the block partitioning of the chroma block, there may be a constraint with respect to a binary split and a ternary split. The constraint may be applied to the blocks inside the picture and may not be applied to the blocks adjacent to the boundary line of the picture.

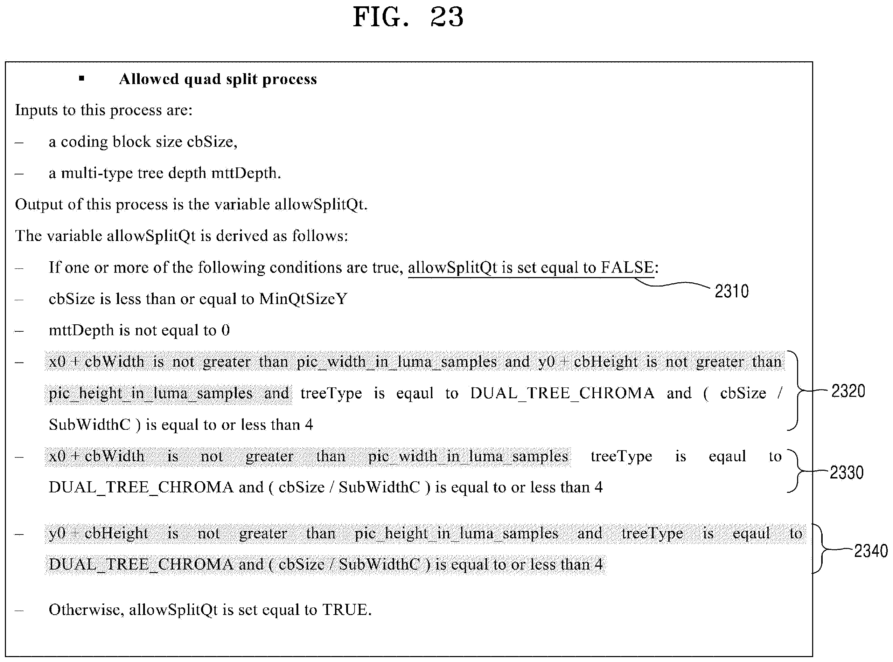

Hereinafter, an embodiment in which a binary split and a ternary split of the chroma block inside the picture are constrained and a binary split and a ternary split of the chroma block adjacent to the boundary line of the picture are allowed is described in detail with reference to FIGS. 23 through 26.

FIG. 23 illustrates a case in which conditions for allowing a quad split are differently set between a CTU spanning a boundary line of a picture and a CTU located in the picture, according to another embodiment.

FIG. 23 illustrates conditions for determining (2310) not to allow a variable allowSplitQt indicating whether or not to allow a quad split.

For example, when a size cbSize of a current block is less than or equal to a minimum luma block size MinQtSizeY for which a quad split is allowed, the variable allowSplitQt is determined as FALSE and the quad split is not allowed.

As another example, according to an embodiment, a quad split is possible for a CTU. Also, a split mode of a quad tree leaf block for which the quad split is not further performed includes only a binary split, a ternary split, or a non-split mode, and thus, the quad split is not allowed. Here, a split tree structure generated from the quad tree leaf block is a multi-type tree structure. Thus, when the number of splits mttDepth performed through the current block in the multi-type tree structure is not the same as 0, the variable allowSplitQt is determined as FALSE and the quad split of the current block is not allowed.

The above two embodiments are conditions for determining whether or not to apply a quad split inside the boundary line of the picture. However, an embodiment according to next conditions 2320, 2330, and 2340 is an exceptional condition applied to a block contacting the boundary line of the picture.

According to the condition 2320, when an x coordinate of a right boundary line of the current block is not greater than the width of the picture, a y coordinate of a lower boundary line of the current block is not greater than the height of the picture, a tree type of the current block is a dual tree type DUAL_TREE_CHROMA, and a width of the chroma block corresponding to the current block is less than or equal to 4, the variable allowSplitQT is determined as FALSE, and the quad split of the current block is not allowed. That is, when the current block does not deviate from the right boundary line and the lower boundary line of the picture and is located in the picture, and the width of the chroma block corresponding to the current block is less than or equal to 4, it denotes that a quad split of the chroma block is not allowed.

According to the condition 2330, when an x coordinate of a right boundary line of the current block is not greater than the width of the picture, and a width of the chroma block corresponding to the current block is less than or equal to 4, the variable allowSplitQT is determined as FALSE and the quad split of the current block is not allowed. That is, when the current block does not deviate from a right boundary line of the picture even when the current block deviates from a lower boundary line of the picture, and when the width of the chroma block corresponding to the current block is less than or equal to 4, it denotes that a quad split of the chroma block is not allowed.

According to the condition 2340, when a y coordinate of a lower boundary line of the current block is not greater than the height of the picture, and a height of the chroma block corresponding to the current block is less than or equal to 4, the variable allowSplitQT is determined as FALSE and the quad split of the current block is not allowed. That is, when the current block does not deviate from a lower boundary line of the picture even when the current block deviates from a right boundary line of the picture, and when the width of the chroma block corresponding to the current block is less than or equal to 4, it denotes that a quad split of the chroma block is not allowed.

When the conditions 2320, 2330, and 2340 are not met, the variable allowSplitQt may be determined as TRUE, and thus, the quad split of the current block may be allowed. For example, when the right boundary line of the current block deviates from the right boundary line of the picture and the lower boundary line of the current block deviates from the lower boundary line of the picture, the conditions 2320, 2330, and 2340 are not met. Thus, when both of the right and lower boundary lines of the current block deviate from the boundary line of the picture, the variable allowSplitQt is determined as TRUE, and thus, a quad split of a chroma block having a size of 4x4 may be allowed.

Thus, there may be an exceptional embodiment in which one or more conditions applied to allow the quad split of the chroma block having the size of 4x4 that is located inside the picture are not applied to the chroma block having the size of 4x4 located outside the picture.

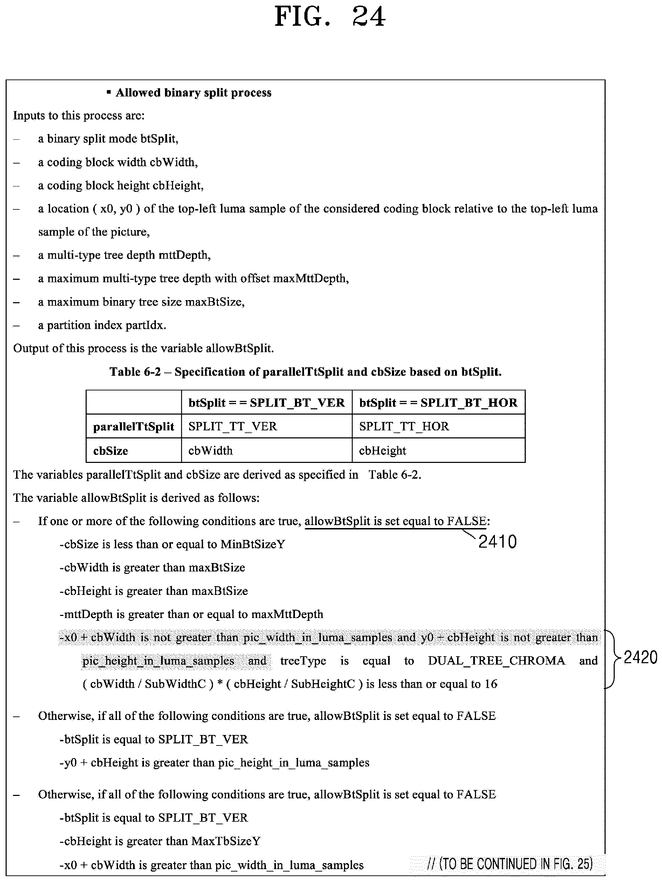

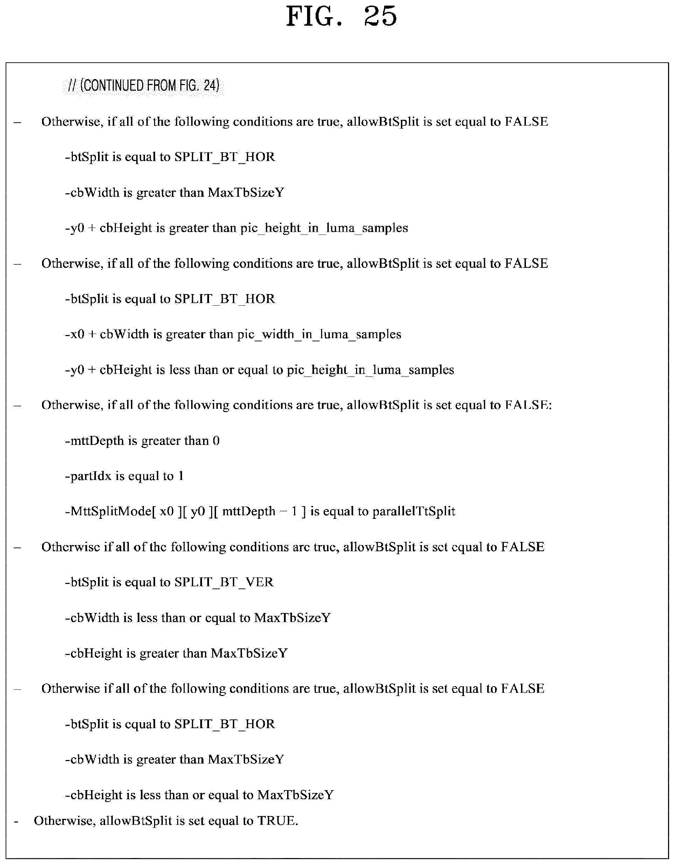

FIGS. 24 and 25 illustrate a case in which conditions for allowing a binary split are differently set between a CTU spanning a boundary line of a picture and a CTU located inside the picture, according to another embodiment.

FIGS. 24 and 25 illustrate conditions for determining (2410) not to allow a variable allowBtSplit indicating whether or not to allow a binary split.

For example, when a size cbSize of a current block is less than or equal to a minimum luma block size MinBtSizeY for which a binary split is allowed, the variable allowBtSplit is determined as FALSE and the binary split is not allowed.

For example, when a width of the current block is greater than a maximum size maxBtSize for which a binary split is possible, the variable allowBtSplit is determined as FALSE and the binary split is not allowed. Similarly, when a height of the current block is greater than the maximum size maxBtSize for which the binary split is possible, the variable allowBtSplit is determined as FALSE and the binary split is not allowed.

For example, when the number of splits mttDepth performed through the current block in a multi-type tree structure is not the same as 0, the variable allowBtSplit is determined as FALSE and the binary split of the current block is not allowed.

The above three embodiments are conditions for determining whether or not to apply the binary split inside the boundary line of the picture. However, an embodiment according to next conditions 2420 is an exceptional condition applied to a block contacting the boundary line of the picture.

According to the condition 2420, when an x coordinate of a right boundary line of the current block is not greater than the width of the picture, a y coordinate of a lower boundary line of the current block is not greater than the height of the picture, a tree type of the current block is a chroma dual tree type DUAL_TREE_CHROMA, and a height of a chroma block corresponding to the current block is less than or equal to 4, the variable allowBtSplit is determined as FALSE and the binary split of the current block is not allowed. That is, when the current block does not deviate from both the right boundary line and the lower boundary line of the picture, and the number of chroma samples corresponding to the current block is less than or equal to 16, it denotes that a binary split of the chroma block is not allowed.

When the conditions 2420 are not met, the variable allowBtSplit may be determined as TRUE, and thus, the binary split of the current block may be allowed, even when a size of the chroma block is less than or equal to 4x4. For example, one or more cases in which a right boundary line of the current block deviates from the right boundary line of the picture or a lower boundary line of the current block deviates from the lower boundary line of the picture do not satisfy the conditions 2420. Thus, when only one of the right and lower boundary lines of the current block deviates from the boundary line of the picture, the variable allowBtSplit is determined as TRUE, and thus, a binary split of the chroma block having a size of 4x4 or having a size less than the size of 4x4 may be allowed.

Thus, there may be an exceptional embodiment in which one or more conditions applied to allow the binary split of the block located inside the picture are not applied to the block located outside the picture.

For example, in FIG. 24, when a split mode of the current block is a binary vertical split mode (btSplit is equal to SPLIT_BT_VER) and a lower boundary line of the current block deviates from a boundary line of the picture (yo+cbHeight is greater than pic_height_in_luma_samples), the variable allowBtSplit is determined as FALSE and the binary split of the current block is not allowed. On the contrary, even when the lower boundary line of the current block deviates from the boundary line of the picture, the variable allowBtsplit is determined as TRUE, and the binary split may be allowed regardless of the size of the current block, when the split mode of the current block is a binary horizontal split mode.

For example, in FIG. 25, when a split mode of the current block is a binary horizontal split mode (btSplit is equal to SPLIT_BT_HOR), and when a right boundary line of the current block deviates from the boundary line of the picture (x0+cbWidth is greater than pic_width_in_luma_samples), and a lower boundary line of the current block does not deviate from the boundary line of the picture (yo+cbHeight is less than or equal to pic_height_in_luma_samples), the variable allowBtSplit is determined as FALSE and the binary split of the current block is not allowed. On the contrary, even when the lower boundary line of the current block deviates from the boundary line of the picture, and the right boundary line of the current block deviates from the boundary line of the picture, the variable allowBtsplit is determined as TRUE, and the binary split may be allowed regardless of the size of the current block, when the split mode of the current block is a binary vertical split mode.

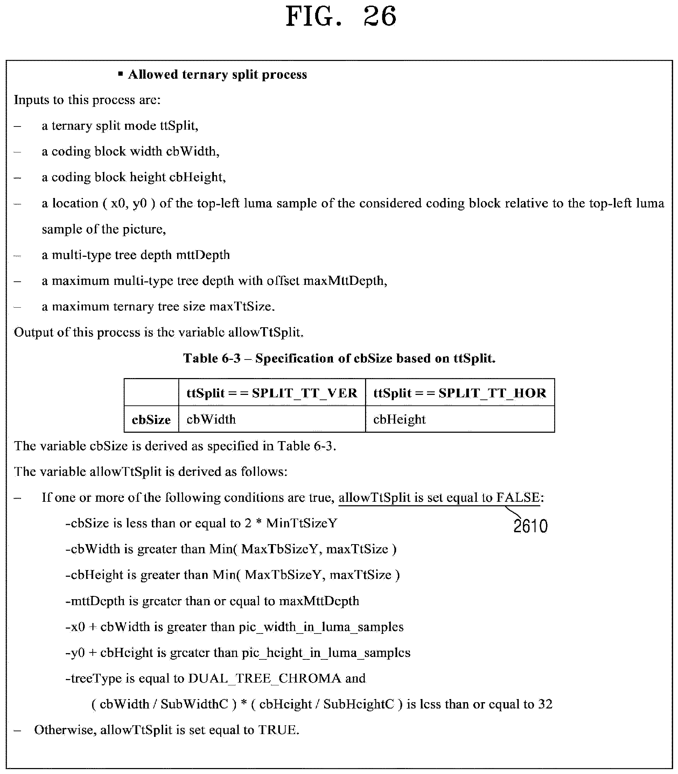

FIG. 26 illustrates a case in which conditions for allowing a ternary split are differently set between a CTU spanning a boundary line of a picture and a CTU located inside the picture, according to another embodiment.

FIG. 26 illustrates conditions for determining (2610) not to allow a variable allowTtSplit indicating whether or not to allow a ternary split.

For example, when a size cbSize of a current block is less than or equal to twice a minimum luma block size MinTtSizeY for which a binary split is allowed, the variable allowTtSplit is determined as FALSE and the ternary split is not allowed.

For example, when the number of splits mttDepth performed through the current block in a multi-type tree structure is not the same as 0, the variable allowTtSplit is determined as FALSE and the ternary split of the current block is not allowed.

For example, when a right boundary line of the current block deviates from the boundary line of the picture (x0+cbWidth is greater than pic_width_in_luma_samples), the variable allowTtSplit is determined as FALSE, and the ternary split of the current block is not allowed.

For example, when a lower boundary line of the current block deviates from the boundary line of the picture (y0+cbHeight is greater than pic_height_in_luma_samples, the variable allowTtSplit is determined as FALSE, and the ternary split of the current block is not allowed.

Thus, when the current block deviates from any one of the right boundary line and the lower boundary line, the ternary split of the current block is not allowed.

For example, when the tree type of the current block is a chroma dual tree type and the number of chroma samples corresponding to the current block is less than or equal to 32, the ternary split of the chroma block is not allowed. Thus, the ternary split of the chroma block having a size of 8x4, 4x8, 4x4, 4x2, or 2x4 is not allowed.

As another example, even when a width and a height of the current picture are integer multiples of 8, a size of the picture may be reduced as 2:1 or increased as 1:1.5, when an adaptive resolution control (ARC) technique is applied. Thus, when video encoding is performed on the picture, the size of which is changed, a chroma intra block having a size of 2x2 may occur at the boundary line of the picture. To prevent this, the video encoding apparatus 1900 may perform sample padding such that both of the width and the height of the picture are integer multiples of 8 even when the ARC technique is applied.

For example, when a size of the current picture is 260x260, a CTU having a size of 4x4 may occur at a right lower boundary line of the picture and the chroma intra block having the size of 2x2 may be generated from the CTU having the size of 4x4. To prevent this, the video encoding apparatus 1900 may change each of the width and the height of the picture as 264, which is a multiple number of 8, and may perform sample padding according to an increase of the width and the height of the picture. Also, when the picture having the size of 264x264 is reduced to 2:1 according to the ARC technique, a picture having a size of 132x132 may be generated. A CTU having a size of 4x4 may be generated at a right boundary line of the picture having the size of 132x132. Also in this case, the sample padding may be performed such that the size of the picture becomes 136x136 rather than 132x32, and thus, the intra block having the size of 4x4 may not be generated.

According to a color format, chroma blocks having sizes of 2x2, 2x4, and 4x2 may be generated or may not be generated. For example, when sizes of luma blocks are 4x4, 4x8, and 8x4 in the case of a color format of YUV 4:2:0, and when sizes of luma blocks are 4x4, 4x8, and 8x4 in the case of a color format of YUV 4:2:2, chroma blocks having sizes of 2x2, 2x4, and 4x2 may be generated. However, in the case of a color format of YUV 4:4:4, the chroma blocks having the sizes of 2x2, 2x4, and 4x2 may not be generated.

Thus, in the case of the color format of YUV 4:4:4, techniques for not generating the chroma blocks having the sizes of 2x2, 2x4, and 4x2 may not be used.

For example, in the case of the color format of YUV 4:4:4, the size of the picture may be determined as an integer multiple of a minimum size of CU (an integer multiple of 4).

As another example, in the color format of YUV 4:2:2, the width of the picture may be determined as an integer multiple of 8, and when the width of the picture is not an integer multiple of 8, sample padding may be performed, and the height of the picture may be determined as an integer multiple of a minimum size (an integer multiple of 4).

As another example, in the color format of YUV 4:2:2, the height of the picture may be determined as an integer multiple of 8, and when the height of the picture is not an integer multiple of 8, sample padding may be performed, and the width of the picture may be determined as an integer multiple of a minimum size (an integer multiple of 4).

As another example, when chroma blocks having sizes of 2x2, 2x4, and 4x2 are generated by being split from a luma block, only splitting into the luma block may be allowed and splitting into the chroma block may not be allowed in an intra prediction mode. In an inter prediction mode, splitting into the luma block and splitting into the chroma block may not be allowed. However, the constraint of allowing only the splitting into the luma block and not allowing the splitting into the chroma blocks having the sizes of 2x2, 2x4, and 4x2 in the intra prediction mode may not be used in the color format of YUV 4:4:4.

As another example, regardless of the color format, according to a size of a split chroma block, it may be determined whether or not to use the constraint of allowing only the splitting into the luma block and not allowing the splitting into the chroma blocks having the sizes of 2x2, 2x4, and 4x2 in the intra prediction mode.

For example, when the chroma blocks having the sizes of 2x2, 2x4, and 4x2 are generated after the splitting, a flag indicating the constraint of allowing only the splitting into the luma block and not allowing the splitting into the chroma blocks having the sizes of 2x2, 2x4, and 4x2 in the intra prediction mode may be signaled. However, when the chroma blocks having the sizes of 2x2, 2x4, and 4x2 are not generated after the splitting, the flag indicating the constraint may not be signaled.

Hereinafter, with reference to FIGS. 27 and 28, a method performed by the video encoding apparatus 1900 to perform sample padding to process a block deviating from a boundary line of a picture, according to an embodiment, is described.

FIG. 27 illustrates embodiments in which padding is performed on chroma blocks having sizes of 2x2, 4x2 and 2x4 and located at the boundary line of the picture, such that the chroma blocks become a chroma block having a size of 4x4, according to another embodiment.

When a block 2710 having a size of 2x2, a block 2730 having a size of 4x2, and a block 2750 having a size of 2x4 occur at the boundary line of the picture, the video encoding apparatus 1900 may perform sample padding such that the blocks 2710, 2730, and 2750 expand to a block having at least 16 samples. The video encoding apparatus 1900 may perform the sample padding such that the blocks 2710, 2730, and 2750 become the block having the size of 4x4, and then, may perform an encoding operation on the block having the size of 4x4.

In detail, for each of the blocks 2710, 2730, and 2750 to be the block having the size of 4x4, a value based on a predetermined rule may be assigned to a sample included in each of external regions 2720, 2740, and 2760 of the blocks. The sample padding method may vary.

For example, like a sample padding method in motion compensation, sample padding may be performed by performing extrapolation on the external regions 2720, 2740, and 2760 of the blocks by using values of samples adjacent to inner spaces of boundary lines of the blocks 2710, 2730, and 2750.

As another example, sample padding may be performed by filling sample values of the external regions 2720, 2740, and 2760 of the blocks by using a specific value. In detail, by using a bit depth BIT_DEPTH of a current sample of the blocks 2710, 2730, and 2750, the external regions 2720, 2740, and 2760 of the blocks may be filled with a value of (1 << (BIT_DEPTH - 1)).

The video encoding apparatus 1900 may encode the blocks expanded to have 16 samples by using various methods.

For example, prediction, transformation/quantization (including inverse-transformation and inverse-quantization), and residual coding may be performed on the expanded block by using a block having the same size.

As another example, while the prediction performed on the expanded block may be performed on an expanded block having a size of 4x4, the transformation/quantization and the residual coding may be performed only on original blocks 2710, 2730, and 2760 before expansion

As another example, when a sub-block transform (SBT) technique is applied, the SBT technique may be applied on the expanded block in the same manner. For example, in the case of the block 2730 having a size of 4x2, when the SBT technique is applied to the expanded block having the size of 4x4, a binary horizontal split may be performed, and only the block 2730 having the size of 4x2, which corresponds to a first transform block generated via the binary horizontal split performed on the expanded block having the size of 4x4, may be encoded in a residual coding mode for transmitting residual information. The residual coding mode may be set without signaling.

Similarly, in the case of the block 2760 having a size of 2x4, when the SBT technique is applied to the expanded block having the size of 4x4, a binary vertical split may be performed, and only a first transform block generated therefrom may be encoded in a residual coding mode for transmitting residual information. This residual coding mode may be set without signaling.

When the blocks 2730 and 2760 expand to the block having the size of 4x4, SBT may be allowed to be applied not only when the blocks 2730 and 2760 are inter blocks, but also when the blocks 2730 and 2760 are intra-blocks.

The block 2710 is not a type of block supporting SBT. However, the block 2710 may be expanded to a shape of the blocks 2730 and 2760, and then, may be expanded to the size of 4x4. Thus, SBT may be applied to the block 2710 via sample padding. A detailed method is described below with reference to FIG. 28.

FIG. 28 illustrates a process of performing transformation/quantization and residual coding, when a chroma block having a size of 2x2 and located at a boundary line of a picture is padded to be a chroma block having a size of 4x4, according to another embodiment.

The video encoding apparatus 1900 may perform sample padding on an external region 2820 of a block such that a block 2810 having a size of 2x2 becomes a block having a size of 2x4, and may perform sample padding on an external region 2830 of a block to finally generate a block having a size of 4x4. In this case, prediction may be performed on the block having the size of 4x4, and transformation/quantization and residual coding may be performed on the block having the size of 2x4.

Also, similarly to the SBT, a transform type (for example, a DST-7 and a DST-8) may be determined without signaling according to a shape of the sample padded block. As another example, when the sample padding is performed, the transform type may be fixed to a DCT-2.

As another example, when a minimum size of a luma block which may be allowed in the video encoding apparatus 1900 and the video decoding apparatus 1700 is 4x4, there may be a luma block having a size of 4x4 and a chroma block having a size of 2x2 that are adjacent to the boundary line of the picture. To prevent this, the following two sample padding methods may be applied.

According to an embodiment, the video encoding apparatus 1900 and the video decoding apparatus 1700 may determine an allowable picture size as an integer multiple of a greater number (max(min_blocksize, 8)) between the allowable minimum block size and 8. The video encoding apparatus 1900 may generate an allowable picture by sample padding a picture according to a size falling short, when an actual size of the picture is less than a size of the allowable picture. As a detailed example, when a size of the picture is 260x260, and a size of a smallest block is 4, the size of the allowable picture has to be an integer multiple of 8. A size of the given picture is 260/8=32.5 and is not an integer multiple of 8, the video encoding apparatus 1900 may generate and decode a picture having a size of 264x264 by performing sample padding by 4 samples in each of a width direction and a height direction so that the size of the picture is an integer multiple of 8. This method is referred to as "picture level padding." A display apparatus may intactly display the reconstructed picture having the size of 264x264 or may display the original picture having the size of 260x260 by cropping the 4 samples in each of the width and the height directions from the picture having the size of 264x264. The video decoding apparatus 1700 may reconstruct the picture having the size of 264x264.

According to another embodiment, the sample padding may be performed according to a "block level padding" method. Even when the blocks having the sizes of 2x2, 2x4, and 4x2 are constrained, there may be blocks having the sizes of 2x2, 2x4, and 4x2 and adjacent to the boundary line of the picture, and thus, the video encoding apparatus 1900 may perform padding according to the number of samples falling short, to expand the blocks having the sizes of 2x2, 2x4, and 4x2 to the block having the size of 4x4. The video encoding apparatus 1900 may perform encoding on the block having the size of 4x4. The video decoding apparatus 1700 may reconstruct the block having the size of 4x4.

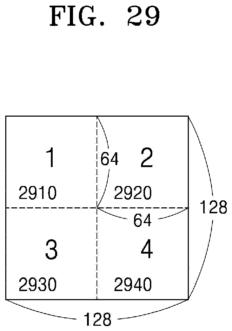

Hereinafter, a method of constraining an encoding order of a CTU is described below with reference to FIGS. 29 through 38.

FIG. 29 illustrates a coding order of a transform block in a CTU having a size of 128x128.

In the MPEG-5 EVC or VVC standard on which standardization is currently performed, for efficiency of a codec, in particular, for efficiency of hardware, a maximum size of a block for pipeline processing is made the same as a size of 64x64, which is a size of a largest transform block. To this end, while the size of the CTU is 128x128, functions of various encoding tools with respect to the CTU are performed in units of a block having a size of 64x64. As illustrated in FIG. 29, decoding may be performed in a stated order of a transform block 2910, a transform block 2920, a transform block 2930, and a transform block 2940, each of which has the size of 64x64 and is determined to perform transformation on the CTU having the size of 128x128.

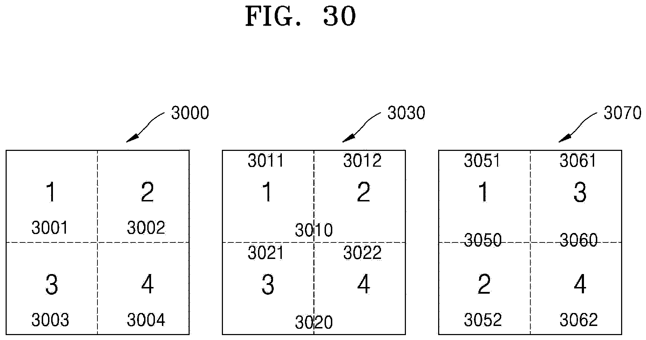

FIG. 30 illustrates a coding order of blocks that are split, when a quad split, a binary horizontal split, and a binary vertical split are performed on the CTU of FIG. 29.

For the CTU having the size of 128x128, a split mode not intervening a shape of the block having the size of 64x64, which is a pipeline data unit, is allowed. In detail, in the CTU having the size of 128x128, a quad split mode 3000, a binary horizontal split mode 3030, and a binary vertical split mode 3070 may be allowed.

When the CTU is split in the quad split mode 3000, decoding may be performed in a stated order of a block 3001, a block 3002, a block 3003, and a block 3004, which are pipeline data units.

When the CTU is split in the binary horizontal split mode 3030, blocks 3010 and 3020 having a size of 128x64 may be generated. The block 3010 having the size of 128x64 may include transform blocks 3011 and 3012, and the block 3020 having the size of 128x64 may include transform blocks 3021 and 3022. Because each of the transform blocks 3011, 3012, 3021, and 3022 may be determined to be a pipeline data unit having a size of 64x64, transformation/quantization may be performed for each transform block 3011, 3012, 3021, or 3022 according to a pipeline method. The transform block 3011, the transform block 3012, the transform block 3021, and the transform block 3022 may be decoded in a stated order.

When the CTU is split in the binary vertical split mode 3070, blocks 3050 and 3060 having a size of 128x64 may be generated. The block 3050 having the size of 64x128 may include transform blocks 3051 and 3052, and the block 3060 having the size of 64x128 may include transform blocks 3061 and 3062. Because each of the transform blocks 3051, 3052, 3061, and 3062 may be determined to be a pipeline data unit having a size of 64x64, transformation/quantization may be performed for each transform block 3051, 3052, 3061, or 3062 according to a pipeline method. The transform block 3051, the transform block 3052, the transform block 3061, and the transform block 3062 may be decoded in a stated order.

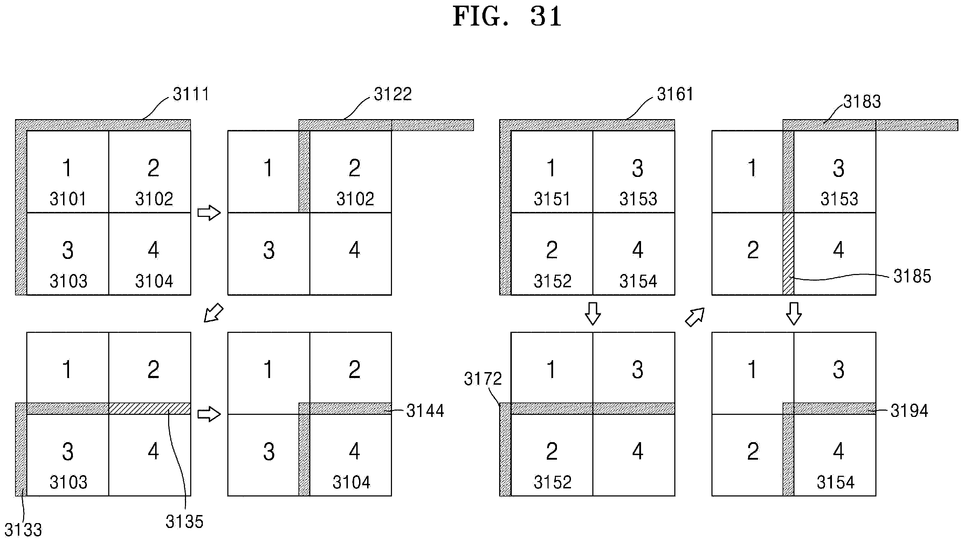

In an example of FIG. 30, unlike the coding orders of the transform blocks in the quad split mode 3000 and the binary horizontal split mode 3030, a coding order of the transform blocks in the binary vertical split mode 3060 may be different. When each block or transform block is further split, another type of coding order may be determined in a pipeline data unit. When the coding orders of the pipeline data units are different according to a split mode as described in the example of FIG. 30, the pipeline data units have to be processed by taking into account two types of coding orders, and thus, complexity of the pipeline in a hardware manner may be increased. An embodiment in which complexity increases when prediction is performed in a pipeline data unit is described in detail below with reference to FIG. 31.

FIG. 31 illustrates embodiments in which a location of a reference sample which may be used is changed when prediction is performed in a pipeline data unit according to a coding order.

First, in the case of a coding order of a pipeline data unit 3101, a pipeline data unit 3102, a pipeline data unit 3103, and a pipeline data unit 3104, when prediction is performed for each pipeline data unit, locations of reference samples are described.

When prediction is performed on the pipeline data unit 3101, neighboring samples surrounding an upper boundary line of the pipeline data units 3101 and 3102 and samples of neighboring blocks surrounding a left boundary line of the pipeline data units 3101 and 3103 may be used as reference samples 3111.

When prediction is performed on the pipeline data unit 3102, samples of the pipeline data unit 3101 surrounding a left boundary line of the pipeline data unit 3102, samples of a neighboring block surrounding an upper boundary line of the pipeline data unit 3102, and samples of an upper right neighboring block of the pipeline data unit 3102 may be used as reference samples 3112.

When prediction is performed on the pipeline data unit 3103, samples of a neighboring block surrounding a left boundary line of the pipeline data unit 3103, and samples of the pipeline data units 3101 and 3102 surrounding an upper boundary line of the pipeline data units 3103 and 3104 may be used as reference samples 3133.

When prediction is performed on the pipeline data unit 3104, samples of the pipeline data units 3103 and 3102 surrounding a left boundary line and an upper boundary line of the pipeline data unit 3104 may be used as reference samples 3144.

Next, in the case of a coding order of a pipeline data unit 3151, a pipeline data unit 3152, a pipeline data unit 3153, and a pipeline data unit 3154, when prediction is performed for each pipeline data unit, locations of reference samples are described.

When prediction is performed on the pipeline data unit 3151, neighboring samples surrounding an upper boundary line of the pipeline data units 3151 and 3153 and samples of neighboring blocks surrounding a left boundary line of the pipeline data units 3151 and 3152 may be used as reference samples 3161.

When prediction is performed on the pipeline data unit 3152, samples of a neighboring block surrounding a left boundary line of the pipeline data unit 3152 and samples of the pipeline data unit 3151 surrounding an upper boundary line of the pipeline data unit 3152 may be used as reference samples 3172.

When prediction is performed on the pipeline data unit 3153, samples of the pipeline data units 3151 and 3152 surrounding a left boundary line of the pipeline data units 3152 and 3154, samples of a neighboring block surrounding an upper boundary line of the pipeline data unit 3153, and samples of an upper right neighboring block of the pipeline data unit 3153 may be used as reference samples 3183.

When prediction is performed on the pipeline data unit 3154, samples of the pipeline data units 3152 and 3153 surrounding a left boundary line and an upper boundary line of the pipeline data unit 3154 may be used as reference samples 3194.

When reference locations for performing prediction for each pipeline data unit are compared between the coding order of the pipeline data unit 3101, the pipeline data unit 3102, the pipeline data unit 3103, and the pipeline data unit 3104, and the coding order of the pipeline data unit 3151, the pipeline data unit 3152, the pipeline data unit 3153, and the pipeline data unit 3154, the following difference is identified.

First, in the case of the coding order of the pipeline data unit 3101, the pipeline data unit 3102, the pipeline data unit 3103, and the pipeline data unit 3104, the reference samples 3133 for performing prediction on the pipeline data unit 3103 include samples 3135 of the pipeline data unit 3102 surrounding an upper boundary line of the pipeline data unit 3104. However, in the case of the coding order of the pipeline data unit 3151, the pipeline data unit 3152, the pipeline data unit 3153, and the pipeline data unit 3154, the reference samples 3172 for the pipeline data unit 3152 of the same location do not include the samples 3135.

Also, in the coding order of the pipeline data unit 3151, the pipeline data unit 3152, the pipeline data unit 3153, and the pipeline data unit 3154, the reference samples 3183 for performing prediction on the pipeline data unit 3153 include samples 3185 of the pipeline data unit 3152 surrounding a left boundary line of the pipeline data unit 3154. However, in the case of the coding order of the pipeline data unit 3101, the pipeline data unit 3102, the pipeline data unit 3103, and the pipeline data unit 3104, the reference samples 3122 for the pipeline data unit 3102 of the same location do not include the samples 3185.

Thus, as the coding order of the pipeline data units is changed, the location of the different reference samples is determined for each pipeline data unit, and thus, a complex pipeline architecture is caused.

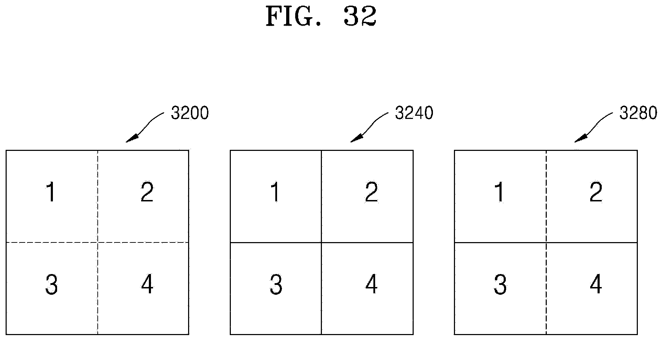

Hereinafter, a coding order of data units for simplifying a pipeline architecture is provided with reference to FIGS. 32 through 38.

The video encoding apparatus 1900 and the video decoding apparatus 1700 according to an embodiment may constrain a coding order of blocks having a size of 64x64 and split from a CTU having a size of 128x128 into one type. For example, from among the four blocks having the size of 64x64 and split from the CTU, a coding order of the pipeline data units may be fixed in a stated order of an upper left block, an upper right block, a lower left block, and a lower right block. To support this, split methods of FIGS. 32 through 34 may be used.

FIG. 32 illustrates a first set of a split method allowed in a CTU having a size of 128x128 to fix a coding order of pipeline data units, according to an embodiment.

The first set of the split method allowed in the CTU having the size of 128x128 includes a non-split mode 3200, a quad split mode 3240, and a binary horizontal split mode 3280. In the case of the non-split mode 3200, transformation/quantization (inverse-quantization/inverse-transformation) and residual coding may be performed in a stated order of an upper left transform block, an upper right transform block, a lower left transform block, and a lower right transform block each having a size of 64x64. In the case of the quad split mode 3240, prediction, transformation/quantization (inverse-quantization/ inverse-transformation), and residual coding may be performed in a stated order of an upper left coding unit, an upper right coding unit, a lower left coding unit, and a lower right coding unit, each being split from the CTU and having a size of 64x64. In the case of the binary horizontal split mode 3280, CUs having a size of 64x32 may be split from the CTU, prediction may be performed in a stated of an upper CU and a lower CU from among the CUs having the size of 64x32, and transformation/quantization (inverse-quantization/ inverse-transformation) and residual coding may be performed in a stated order of an upper left transform block, an upper right transform block, a lower left transform block, and a lower right transform block included in the CUs having the size of 64x32.

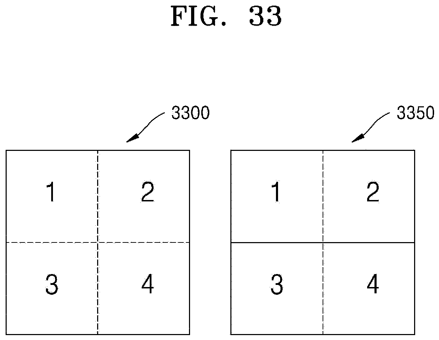

FIG. 33 illustrates a second set of a split method allowed in a CTU having a size of 127x127 to fix a coding order of pipeline data units, according to an embodiment.

The second set of the split mode allowed in the CTU having the size of 128x128 include a non-split mode 3300 and a binary horizontal split mode 3350. A coding order of transform blocks in the non-split mode 3300 and the binary horizontal split mode 3350 is the same as the coding order described with reference to FIG. 32.

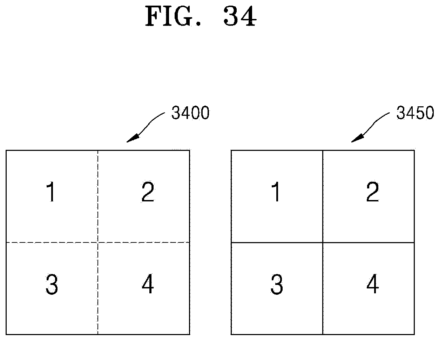

FIG. 34 illustrates a third set of a split method allowed in the CTU having the size of 128x128 to fix a coding order of pipeline data units, according to an embodiment.

The third set of the split method allowed in the CTU having the size of 128x128 includes as non-split mode 3400 and a quad split mode 3450. In the non-split mode 3400 and the quad split mode 3450, a coding order the transform blocks (the coding unit) is the same as the coding order described with reference to FIG. 32.

As another example, in the CTU, the upper left block, the lower left block, the upper right block, and the lower right block may be fixed in a stated order. Here, information about a coding order determined for the actual coding efficiency performance may be signaled and selectively determined. The header level may include a sequence parameter set (SPS), a picture parameter set (PPS), a slice header, a tile header, etc.

However, when a size of the CTU is less than or equal to a size of the pipeline data unit, the coding order described above may not need to be considered, to encode and decode the CTU.

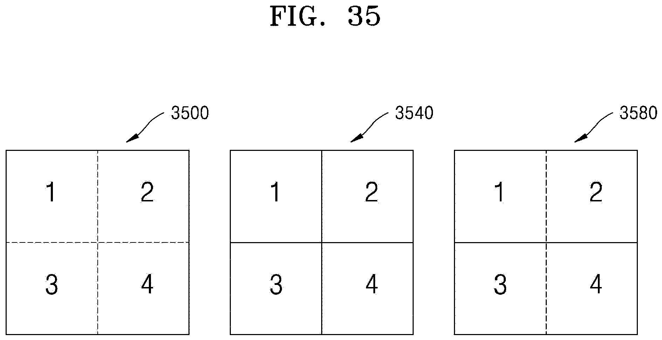

FIG. 35 illustrates an embodiment applicable to the VVC international standard, in order to constrain a split method allowed in a CTU according to an embodiment.

When the video decoding apparatus 1900 complies with the VVC international standard, a current slice type may be an intra slice type, and in a CTU having a size of 128x128, only a quad split mode may be allowed. In the case of the CTU having the size of 128x128 and having an inter P or inter B slice-type, only a quad split mode, a binary vertical split mode, a binary horizontal split mode, and a non-split mode may be allowed.

In particular, an allowable coding order is constrained to a raster scan order, and in the inter-P or B slice-typed CTU having the size of 128x128, only a non-split mode 3500, a quad split mode 3540, and a binary horizontal split mode 3580 may be allowed.

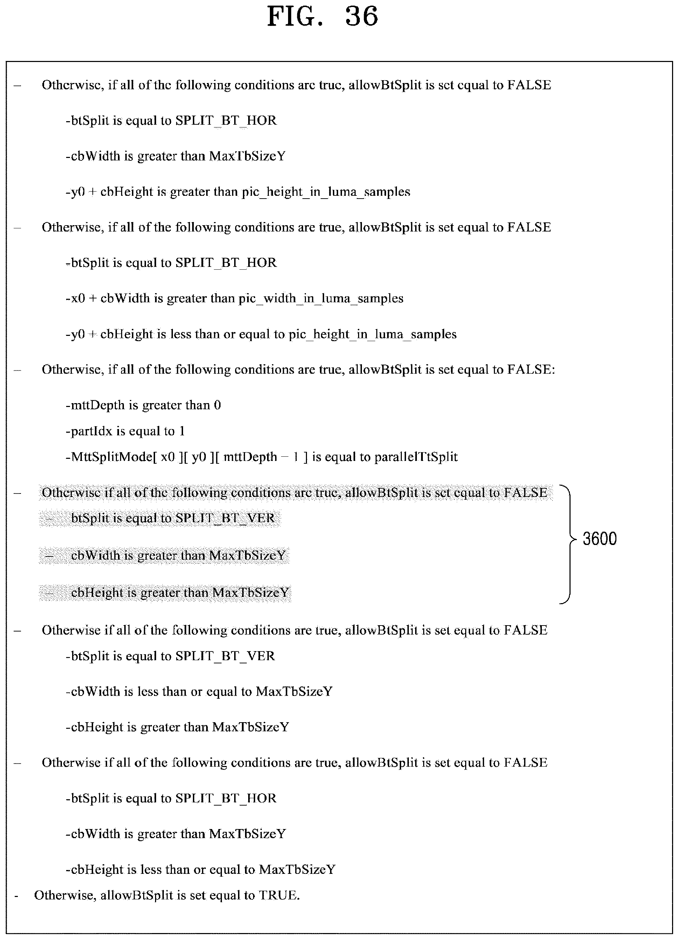

When a height of the CTU is greater than 64, greater than a size of a pipeline data unit, or greater than a maximum size of a transform block, a binary vertical split mode may not be allowed for the current CTU. When a height of the CU is greater than 64 and a width of the CU is equal to or less than 64, a binary vertical split mode is not allowed. Thus, when both of the height and the width of the CU are greater than 64, a binary vertical split may not be allowed. FIG. 36 describes a case when this aspect is applied to a VVC standard working draft (WD).

FIG. 36 illustrates a condition added to allow a binary split in order to be applied to the VVC international standard according to the embodiment of FIG. 35.

According to a condition 3600, when a split mode of a current CU is a binary vertical split mode, and both of a width and a height of the current CU are greater than a maximum size of a transform block, a binary split of the current coding unit is not allowed, and thus, a binary vertical split may not be performed on the current CU.

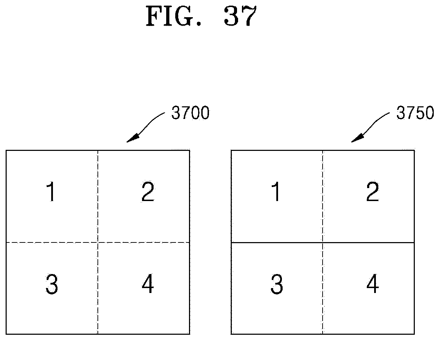

FIG. 37 illustrates an embodiment applicable to the EVC international standard in order to constrain a split method allowed for a CTU, according to an embodiment.

When the video decoding apparatus 1700 complies with the EVC international standard, in a CTU having a size of 128x128, only a binary vertical split mode, a binary horizontal split mode, and a non-split mode are allowed.

Here, when an allowable coding order is constrained to a raster scan order, in the CTU having the size of 128x128, only a non-split mode 3700 and a binary horizontal split mode 3750 are allowed.

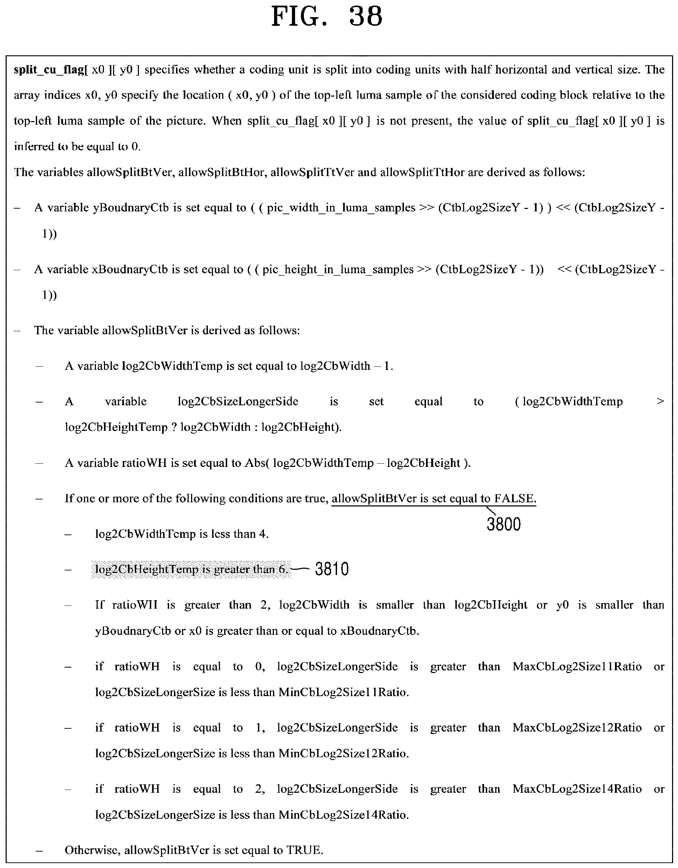

When the EVC international standard WD is corrected not to allow a binary vertical split mode in a CU having a size of 128x128, it is the same as FIG. 38.

FIG. 38 illustrates a condition added to allow a binary split, in order to be applied to the EVC international standard according to the embodiment of FIG. 37.

According to a condition 3810, when a height of a CTU is greater than 64, 2 to the power 6, that is, when a height of a CU is greater than or equal to 128, a binary vertical split mode of the CU is not allowed (3800).

Meanwhile, the embodiments of the present disclosure described above may be written as computer-executable programs that may be stored in a medium.

The medium may continuously store the computer-executable programs, or temporarily store the computer-executable programs or instructions for execution or downloading. Also, the medium may be any one of various recording media or storage media in which a single piece or plurality of pieces of hardware are combined, and the medium is not limited to a medium directly connected to a computer system, but may be distributed on a network. Examples of the medium include magnetic media, such as a hard disk, a floppy disk, and a magnetic tape, optical recording media, such as CD-ROM and DVD, magneto-optical media such as a floptical disk, and ROM, RAM, and a flash memory, which are configured to store program instructions. Machine-readable storage media may be provided as non-transitory storage media. Here, the term "non-transitory storage media" only denotes that the media are tangible and do not include a signal (for example, electromagnetic waves), and does not distinguish a case in which data is semi-permanently stored in the storage media and a case in which data is temporarily stored in the storage media. For example, "the non-transitory storage media" may include a buffer in which data is temporarily stored.

Other examples of the media include recording media and storage media managed by application stores distributing applications or by websites, servers, and the like supplying or distributing other various types of software.

According to an embodiment, methods according to various embodiments disclosed in this specification may be provided as an inclusion of a computer program product. The computer program product may be transacted between a seller and a purchaser as a product. The computer program product may be distributed in the form of a machine-readable storage medium (for example, a compact disc read-only memory (CD-ROM)), may be distributed through an application store (for example, Play Store^{™}), or may be directly distributed or distributed online (for example, downloaded or uploaded) between two user devices (for example, smartphones). In the case of the online distribution, at least part of the computer program product (for example, a downloadable application) may be at least temporarily stored or provisionally generated in machine-readable storage media, such as a server of a manufacturer, a server of an application store, or a memory of a broadcasting server.

While one or more embodiments of the present disclosure have been described with reference to the figures, it will be understood by those of ordinary skill in the art that various changes in form and details may be made therein without departing from the spirit and scope as defined by the following claims.

## Claims

1. A video decoding method comprising:
obtaining a width of a picture based on information about the width of the picture obtained from a bitstream, and obtaining a height of the picture based on information about the height of the picture obtained from the bitstream;
when an x coordinate according to a luma width of a current block generated from the picture is not greater than the width of the picture, a y coordinate according to a luma height of the current block is not greater than the height of the picture, and a split mode of a luma block of the current block is a non-split mode, decoding the luma block; and
determining a chroma block corresponding to the luma block and decoding the chroma block,
wherein the information about the width of the picture indicates a number of luma samples arranged in a width direction of the picture, the number of luma samples arranged in the width direction is an integer multiple of 8, the information about the height of the picture indicates a number of luma samples arranged in a height direction of the picture, and the number of luma samples arranged in the height direction is an integer multiple of 8.

2. The video decoding method of claim 1, wherein the obtaining of the height of the picture comprises, when at least one of a width and a height of a smallest block allowed for the current block is less than 8, obtaining the width of the picture that is an integer multiple of 8 according to the information about the width of the picture and obtaining the height of the picture that is an integer multiple of 8 according to the information about the height of the picture.

3. The video decoding method of claim 1, wherein the decoding of the chroma block comprises, when a tree type of the current block is a dual tree type, determining a tree structure of chroma blocks separately from a tree structure of luma blocks of the current block, and decoding the chroma blocks according to the determined tree structure.

4. The video decoding method of claim 3, wherein the decoding of the chroma blocks comprises, when an x coordinate according to a width of a current chroma block from among the chroma blocks according to the tree structure is not greater than the width of the picture, a y coordinate according to a height of the current chroma block is not greater than the height of the picture, and a split mode of the current chroma block is a non-split mode, decoding the current chroma block.

5. The video decoding method of claim 3, wherein the determining of the tree structure of the current chroma block comprises, when the tree type of the current block is the dual tree type and a prediction mode of the current block is an intra prediction mode, and when a width of the chroma block is 4, not allowing a binary vertical split of the chroma block.

6. The video decoding method of claim 3, wherein the determining of the tree structure of the current chroma block comprises, when the tree type of the current block is the dual tree type and a prediction mode of the current block is an intra prediction mode, and when a number of chroma samples corresponding to the luma block is less than or equal to 16, not allowing a binary split of the chroma block.

7. The video decoding method of claim 3, wherein the determining of the tree structure of the current chroma block comprises, when the tree type of the current block is the dual tree type and a prediction mode of the current block is an intra prediction mode, and when a number of chroma samples corresponding to the luma block is less than or equal to 32, not allowing a ternary split of the chroma block.

8. The video decoding method of claim 1, wherein the information about the width of the picture indicates a value which is an integer multiple of whichever the greater value between a minimum size of the luma block and 8, and the information about the height of the picture indicates a value which is an integer multiple of whichever the greater value between the minimum size of the luma block and 8.

9. The video decoding method of claim 1, wherein the information about the width of the picture and the information about the height of the picture are obtained from at least one of a picture parameter set syntax structure and a sequence parameter set syntax structure.

10. A video decoding apparatus comprising:
a luma block decoder configured to: obtain a width of a picture based on information about the width of the picture obtained from a bitstream; obtain a height of the picture based on information about the height of the picture obtained from the bitstream; and decode the luma block, when an x coordinate according to a luma width of a current block generated from the picture is not greater than the width of the picture, a y coordinate according to a luma height of the current block is not greater than the height of the picture, and a split mode of a luma block of the current block is a non-split mode; and
a chroma block decoder configured to decode a chroma block corresponding to the luma block,
wherein the information about the width of the picture indicates a number of luma samples arranged in a width direction of the picture, the number of luma samples arranged in the width direction is an integer multiple of 8, the information about the height of the picture indicates a number of luma samples arranged in a height direction of the picture, and the number of luma samples arranged in the height direction is an integer multiple of 8.

11. A video encoding method comprising:
generating information about a width of a picture indicating a number of luma samples arranged in a width direction of the picture and information about a height of the picture indicating a number of luma samples arranged in a height direction of the picture;
when an x coordinate according to a luma width of a current block generated from the picture is not greater than the width of the picture, a y coordinate according to a luma height of the current block is not greater than the height of the picture, and a split mode of a luma block of the current block is a non-split mode, encoding the luma block; and
determining a chroma block corresponding to the luma block and encoding the chroma block,
wherein the number of luma samples arranged in the width direction of the picture is an integer multiple of 8, and
the number of luma samples arranged in the height direction of the picture is an integer multiple of 8.

12. The video encoding method of claim 11, wherein the generating of the information about the width of the picture and the information about the height of the picture comprises, when at least one of a width and a height of a smallest block allowed for the current block is less than 8, determining the width of the picture to be an integer multiple of 8 and determining the height of the picture to be an integer multiple of 8.

13. The video encoding method of claim 11, wherein the encoding of the chroma block comprises, when a tree type of the current block is a dual tree type, determining a tree structure of chroma blocks separately from a tree structure of luma blocks of the current block and encoding the chroma blocks according to the determined tree structure.

14. The video encoding method of claim 13, wherein the encoding of the chroma block comprises, when an x coordinate according to a width of a current chroma block from among the chroma blocks according to the tree structure is not greater than the width of the picture, a y coordinate according to a height of the current chroma block is not greater than the height of the picture, and a split mode of the current chroma block is a non-split mode, encoding the current chroma block.

15. The video encoding method of claim 11, wherein the information about the width of the picture is generated to indicate an integer multiple of whichever the greater value between a minimum size of the luma block and 8, and
the information about the height of the picture is generated to indicate an integer multiple of whichever the greater value between the minimum size of the luma block and 8.
